# EUROPEAN PATENT APPLICATION

(11) **EP 4 360 794 A1**
(43) Date of publication of application: **01.05.2024**
(21) Application number: 22828494.9
(22) Date of filing: 23.06.2022
(51) Int. Cl.: B23K 9/127, B25J 9/22, G05B 19/42

(54) **OFFLINE TEACHING DEVICE AND OFFLINE TEACHING METHOD**

(30) Priority: 23.06.2021 JP 2021104353
(71) Applicant: Panasonic Intellectual Property Management Co., Ltd., Osaka-shi, Osaka 540-6207 (JP)
(72) Inventor: OKUMA Katsuaki, Kadoma-shi, Osaka 571-0057 (JP); HIRAYAMA Masaya, Kadoma-shi, Osaka 571-0057 (JP); OKAZAKI Yoshiyuki, Kadoma-shi, Osaka 571-0057 (JP)
(74) Representative: Novagraaf International SA
(86) International application number: PCT/JP2022/025087
(87) International publication number: WO 2022/270578

(57) **Abstract**

An offline teaching device provided with an acquisition unit for acquiring first production data about a workpiece to be produced, and a teaching program creation unit for acquiring a first weld line of the workpiece from the first production data, and creating and outputting a first welding teaching program for executing welding by means of a welding robot, and a first inspection teaching program for executing an inspection of a weld bead, wherein, on the basis of a second weld line, a second welding teaching program for a workpiece to be produced using second production data and a second inspection teaching program are created and output.

## Description

### TECHNICAL FIELD

The present disclosure relates to an offline teaching device and an offline teaching method.

### BACKGROUND ART

Patent Literature 1 discloses an offline teaching device that displays, on a model diagram, an operation trajectory of a robot when a teaching program is executed and displays a part of a plurality of position detection commands and a part of a plurality of welding commands. The offline teaching device includes a display unit that displays a teaching program and a model diagram, a storage unit that stores commands constituting the teaching program and model data of the model diagram, and a control unit that controls the display unit and the storage unit. The teaching program includes a position detection program constituted by a plurality of position detection commands and a welding program constituted by a plurality of welding commands. Here, the commands, the position detection program, and the welding program constituting the teaching program are each created by an operator.

### CITATION LIST

### PATENT LITERATURE

Patent Literature 1: WO2016/021130

### SUMMARY OF INVENTION

### TECHNICAL PROBLEM

The present disclosure provides an offline teaching device and an offline teaching method for more efficiently updating a welding operation teaching program or a scanning operation teaching program executed by a welding robot.

### SOLUTION TO PROBLEM

The present disclosure provides an offline teaching device including: an acquisition unit configured to acquire first production data of a workpiece produced by welding; a storage unit configured to store the acquired first production data; and a teaching program creation unit configured to acquire a first welding line of the workpiece from the first production data and create and output a first welding teaching program for executing the welding by a welding robot and a first inspection teaching program for executing inspection of a weld bead of the produced workpiece, in which the acquisition unit acquires second production data in which at least a part of the first production data is changed, and the teaching program creation unit acquires a second welding line different from the first welding line from the second production data and creates and outputs a second welding teaching program and a second inspection teaching program of a workpiece produced using the second production data based on the acquired second welding line.

The present disclosure provides an offline teaching method performed by an offline teaching device including one or more computers communicably connected to a robot control device capable of controlling a welding robot performing welding, the offline teaching method including: acquiring and storing first production data of a workpiece produced by the welding; acquiring a first welding line of the workpiece from the first production data; creating and outputting a first welding teaching program for executing the welding by the welding robot and a first inspection teaching program for executing inspection of a weld bead of the produced workpiece; acquiring second production data in which at least a part of the first production data is changed; and creating and outputting a second welding teaching program and a second inspection teaching program corresponding to a workpiece produced using the second production data based on the first welding line included in the acquired first production data and the second welding line included in the acquired second production data.

### ADVANTAGEOUS EFFECTS OF INVENTION

According to the present disclosure, a welding operation teaching program or a scanning operation teaching program executed by a welding robot can be updated more efficiently.

### BRIEF DESCRIPTION OF DRAWINGS

[FIG. 1] FIG. 1 is a schematic diagram showing a system configuration example of a welding system.
[FIG. 2] FIG. 2 is a diagram showing an internal configuration example of an inspection control device, a robot control device, a host device, and an offline teaching device according to an embodiment.
[FIG. 3] FIG. 3 is a diagram illustrating a welding robot coordinate system and a workpiece coordinate system.
[FIG. 4] FIG. 4 is a diagram illustrating a workpiece coordinate system.
[FIG. 5] FIG. 5 is a flowchart illustrating a teaching program initial setting procedure for each of a welding operation and a scanning operation performed by an offline teaching device according to the embodiment.
[FIG. 6] FIG. 6 is a diagram illustrating various kinds of data input to the offline teaching device.
[FIG. 7] FIG. 7 is a flowchart illustrating a teaching program update processing procedure of the offline teaching device according to the embodiment.
[FIG. 8] FIG. 8 is a diagram illustrating a position change of a stage.
[FIG. 9] FIG. 9 is a diagram illustrating a design change of a workpiece.
[FIG. 10] FIG. 10 is a diagram illustrating a change in machining accuracy of a workpiece due to lot switching.

### DESCRIPTION OF EMBODIMENTS

### (Background of Present Disclosure)

A device configuration capable of constructing a virtual production facility using an offline teaching device as in Patent Literature 1 is known in the related art. Such an offline teaching device can simultaneously display a part of the position detection commands corresponding to an operation trajectory of a welding robot and a part of welding commands, thereby making it easy for a user to specify an editing portion at the time of creating a teaching program and supporting improvement on the creation efficiency and the accuracy of the created program.

When the welding robot performs appearance inspection, as a quality check method of a welding portion (that is, a weld bead), the welding robot may include a laser sensor or the like capable of measuring a three-dimensional shape of the weld bead by scanning a workpiece, and may automatically perform main welding and the appearance inspection of the welding portion. An appearance inspection result acquired by the appearance inspection can be used for position correction of a positional deviation of the workpiece itself, an individual difference (that is, dimensional tolerance) between workpieces, and the like, by analyzing not only the three-dimensional shape of the weld bead but also a feature point of the workpiece, an edge, a surface of the workpiece which is a main welding target.

When the welding robot scans the workpiece in the appearance inspection, a scanning operation teaching program for scanning the weld bead by a sensor is required. However, since the number and positions of teaching points defined by the scanning operation teaching program are different from the number and positions of teaching points included in the welding operation teaching program, it is desirable to create a teaching program for each weld bead. As described above, the welding operation teaching program and the scanning operation teaching program may frequently finely correct the positions of the teaching points in accordance with a change in a workpiece (for example, an individual difference (dimensional error) between workpieces, a positional deviation of a fixed position of a workpiece, a change in machining accuracy of a workpiece due to lot switching, or the like). However, since an operator updates the welding operation teaching program and the scanning operation teaching program that have been created every time such a fine correction occurs, it is very troublesome to manage the welding operation teaching program and the scanning operation teaching program.

Therefore, in the following embodiments, an example of an offline teaching device and an offline teaching method for improving creation efficiency of a welding operation teaching program or a scanning operation teaching program executed by a welding robot will be described.

Hereinafter, embodiments specifically disclosing an offline teaching device and an offline teaching method according to the present disclosure will be described in detail with reference to the drawings as appropriate. However, unnecessarily detailed descriptions may be omitted. For example, detailed description of well-known matters and redundant description of substantially the same configuration may be omitted. This is to avoid unnecessary redundancy of the following description and to facilitate understanding of those skilled in the art. The accompanying drawings and the following description are provided for those skilled in the art to fully understand the present disclosure, and are not intended to limit the subject matter described in the claims.

Hereinafter, an object (for example, metal) subject to main welding is defined as an "original workpiece", and an object produced (manufactured) by the main welding is defined as a "workpiece". The "workpiece" is not limited to a workpiece produced by the main welding executed once, and may be a composite workpiece produced by the main welding executed two or more times. In addition, a process of producing a workpiece by joining an original workpiece and another original workpiece to each other by a welding robot is defined as "main welding".

### (Configuration of Welding System)

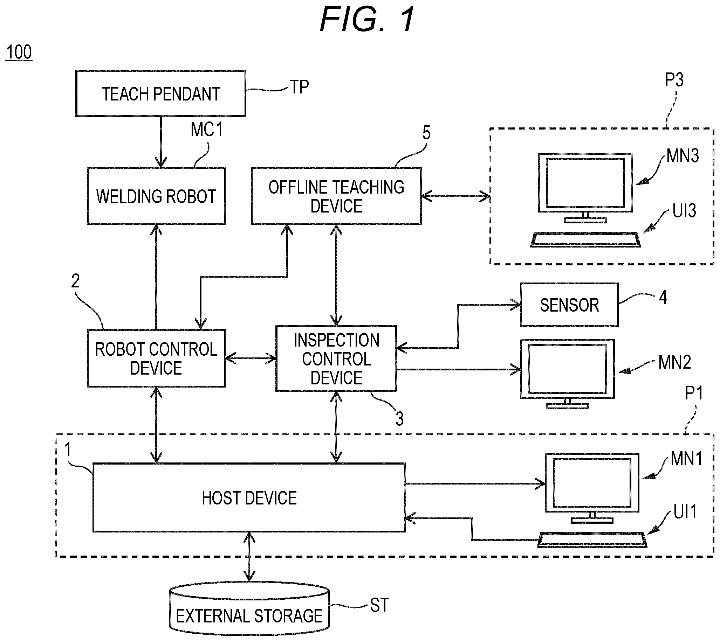

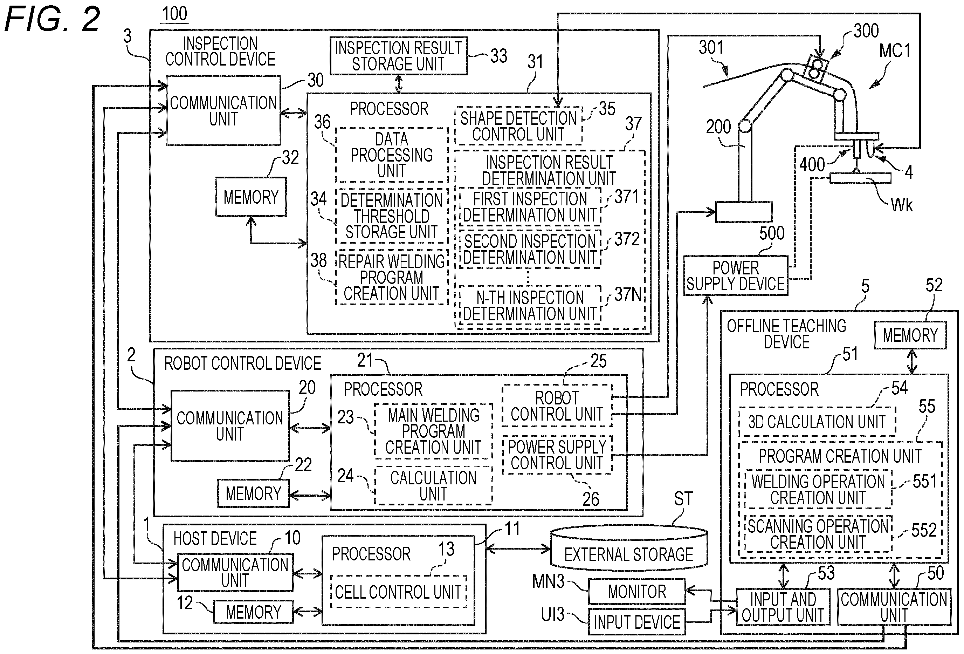

FIG. 1 is a schematic diagram showing a system configuration example of a welding system 100. The welding system 100 is a configuration including a host device 1 connected to an external storage ST, an input interface UI1, and a monitor MN1, a robot control device 2, an inspection control device 3, a sensor 4, an offline teaching device 5, a monitor MN3, an input device UI3, a welding robot MC1, and a monitor MN2. A teach pendant TP is not an essential component and may be omitted. In FIG. 1, the sensor 4 is illustrated as a separate body from the welding robot MC1, but may be provided integrally with the welding robot MC1 (see FIG. 2). The monitor MN2 is not an essential component and may be omitted.

The host device 1 integrally controls start and completion of main welding executed by the welding robot MC1 via the robot control device 2. For example, the host device 1 reads out, from the external storage ST, welding-related information input or set in advance by a user (for example, a welding operator or a system administrator. The same applies hereinafter.), generates a main welding execution command including contents of the welding-related information by using the welding-related information, and transmits the main welding execution command to the corresponding robot control device 2. When the main welding executed by the welding robot MC1 is completed, the host device 1 receives, from the robot control device 2, a main welding completion report indicating that the main welding executed by the welding robot MC1 is completed, updates to a status indicating that the corresponding main welding is completed, and records the status in the external storage ST.

The main welding execution command described above is not limited to being generated by the host device 1, and may be generated by, for example, an operation panel (for example, a programmable logic controller (PLC)) of equipment in a factory or the like in which the main welding is performed or an operation panel (for example, a teach pendant TP) of the robot control device 2. The teach pendant TP is a device for operating the welding robot MC1 connected to the robot control device 2.

In addition, the host device 1 integrally controls start and completion of the bead appearance inspection using the robot control device 2, the inspection control device 3, and the sensor 4. For example, upon receiving the main welding completion report from the robot control device 2, the host device 1 generates a bead appearance inspection execution command of the workpiece produced by the welding robot MC1 and transmits the execution command to each of the robot control device 2 and the inspection control device 3. When the bead appearance inspection is completed, the host device 1 receives, from the inspection control device 3, an appearance inspection report indicating that the bead appearance inspection is completed, updates to a status indicating that the corresponding bead appearance inspection is completed, and records the status in the external storage ST.

Here, the welding-related information is information indicating contents of the main welding executed by the welding robot MC1, and is generated in advance for each process of the main welding and is registered in the external storage ST. The welding-related information includes, for example, the number of original workpieces used in the main welding, workpiece information including an ID of the original workpiece used in the main welding, lot information, a name, and a welding portion of the original workpiece (for example, welding line information and welding line position information), a scheduled execution date on which the main welding is executed, the number of original workpieces to be produced, and various welding conditions during the main welding. The welding-related information is not limited to the data on the items described above, and may further include information such as the welding operation teaching program and the scanning operation teaching program that have already been created (refer to the following description), and welding operation setting information, scanning operation setting information, and the like used to create the teaching programs.

In addition, the welding condition includes, for example, a material and a thickness of the original workpiece, a material and a wire diameter of a welding wire 301, a type of shielding gas, a flow rate of the shielding gas, a set average value of a welding current, a set average value of a welding voltage, a feeding speed and a feeding amount of the welding wire 301, the number of times of welding, and welding time. Further, in addition to the above, the welding condition may include, for example, information indicating a type of the main welding (for example, TIG welding, MAG welding, and pulse welding), a moving speed and a moving time of a manipulator 200.

Based on the main welding execution command transmitted from the host device 1, the robot control device 2 causes the welding robot MC1 to execute main welding using an original workpiece designated by the execution command. The welding-related information described above is not limited to being managed by the host device 1 with reference to the external storage ST, and may be managed by, for example, the robot control device 2. In this case, since the robot control device 2 can know a state in which the main welding is completed, an actual execution date may be managed instead of the scheduled execution date, on which a welding process is scheduled to be executed, in the welding-related information. Although a type of the main welding is not limited in the present specification, in order to make the description easy to understand, a process of joining a plurality of original workpieces to produce one workpiece will be described as an example.

The host device 1 is separately connected to the monitor MN1, the input interface UI1, and the external storage ST such that the host device 1 can input data to and output data from each of the monitor MN1, the input interface UI1, and the external storage ST, and further connected to the robot control device 2 such that data can be communicated between the host device 1 and the robot control device 2. The host device 1 may be a terminal device P1 integrally including the monitor MN1 and the input interface UI1, and may further integrally include the external storage ST. In this case, the terminal device P1 is a personal computer (PC) that is used by the user before the main welding is executed. The terminal device P1 is not limited to the PC described above, and may be a computer device having a communication function, such as a smartphone or a tablet terminal.

The monitor MN1 may be formed using a display device such as a liquid crystal display (LCD) or an organic electroluminescence (EL). The monitor MN1 may display, for example, a screen showing a notification indicating that the main welding is completed or a notification indicating that the bead appearance inspection is completed, which is output from the host device 1. In addition, a speaker (not shown) may be connected to the host device 1 instead of the monitor MN1 or together with the monitor MN1, and the host device 1 may output, via the speaker, a sound of a content indicating that the main welding is completed or a content indicating that the bead appearance inspection is completed.

The input interface UI1 is a user interface that detects an input operation of the user and outputs the input operation to the host device 1, and may be formed using, for example, a mouse, a keyboard, or a touch panel. The input interface UI1 receives, for example, an input operation when the user creates the welding-related information or an input operation when the main welding execution command is transmitted to the robot control device 2.

The external storage ST is formed using, for example, a hard disk drive or a solid state drive. The external storage ST stores, for example, data on the welding-related information created for each main welding, a status of a workpiece Wk produced by the main welding (production status), and workpiece information on the workpiece Wk (see description above). The external storage ST may store, for each welding line, a welding operation teaching program and a scanning operation teaching program created by the offline teaching device 5. The welding operation teaching program and the scanning operation teaching program will be described later.

The robot control device 2 is connected to the host device 1, the inspection control device 3, and the offline teaching device 5 so as to allow data communication therebetween, and is connected to the welding robot MC1 so as to allow data communication therebetween. Upon receiving the main welding execution command transmitted from the host device 1, the robot control device 2 creates a main welding program based on the welding operation teaching program corresponding to the execution command, and controls the welding robot MC1 to execute the main welding. When the robot control device 2 detects that the main welding is completed, the robot control device 2 generates a main welding completion report indicating that the main welding is completed, and notifies the host device 1 of the main welding completion report. Accordingly, the host device 1 can appropriately detect the completion of the main welding by the robot control device 2. A method of detecting completion of the main welding by the robot control device 2 may be, for example, a method of determining completion of the main welding based on a signal indicating the completion of the main welding from a sensor (not shown) provided in a wire feeding device 300, or may be a known method, and contents of the method of detecting completion of the main welding are not limited.

Upon receiving the bead appearance inspection execution command transmitted from the host device 1, the robot control device 2 controls the welding robot MC1 (see FIG. 2) to which the sensor 4 is attached based on the scanning operation teaching program corresponding to the execution command, and executes the appearance inspection of the weld bead generated on the workpiece Wk. Although the appearance inspection report indicating that the bead appearance inspection is completed is transmitted from the inspection control device 3 to the host device 1, the appearance inspection report may be transmitted to the host device 1 from the robot control device 2 itself or from the robot control device 2 receiving an instruction from the inspection control device 3. Accordingly, the host device 1 can appropriately detect the completion of the bead appearance inspection.

Upon receiving a scanning execution command for the workpiece Wk transmitted from the host device 1, the robot control device 2 controls the welding robot MC1 (see FIG. 2) to which the sensor 4 is attached, and executes appearance scanning for acquiring an appearance shape of the workpiece Wk.

The welding robot MC1 is connected to the robot control device 2 so as to allow data communication therebetween. The welding robot MC1 executes the main welding commanded from the host device 1 under control of the corresponding robot control device 2. In addition, the welding robot MC1 moves the sensor 4 based on the scanning operation teaching program, thereby executing the bead appearance inspection and the appearance scanning commanded from the host device 1.

The inspection control device 3 is connected to the host device 1, the robot control device 2, the sensor 4, and the offline teaching device 5 so as to allow data communication therebetween. Upon receiving the bead appearance inspection execution command transmitted from the host device 1, the inspection control device 3 executes, together with the sensor 4, the bead appearance inspection on a welding portion (that is, a weld bead) of the workpiece Wk produced by the welding robot MC 1 (for example, inspection on whether the weld bead formed on the workpiece satisfies a predetermined welding standard) in accordance with the scanning operation teaching program for the corresponding workpiece Wk. The inspection control device 3 performs the bead appearance inspection based on a comparison with master data of a non-defective workpiece predetermined for each workpiece using input data (for example, point cloud data capable of specifying a three-dimensional shape of the weld bead) related to a shape of the weld bead acquired by the sensor 4 as a result of the scanning operation.

The inspection control device 3 performs the bead appearance inspection, generates an appearance inspection report including an inspection determination result of the bead appearance inspection and a notification indicating that the bead appearance inspection is completed, transmits the appearance inspection report to the host device 1, and outputs the appearance inspection report to the monitor MN2. When the inspection control device 3 determines that a defect is detected in the bead appearance inspection of the workpiece, the inspection control device 3 generates an appearance inspection report including an appearance inspection result including information regarding a defective section for repair welding of the defect, and transmits the appearance inspection report to the host device 1 and the robot control device 2. In addition, when the inspection control device 3 determines that a defect is detected by the bead appearance inspection of the workpiece, the inspection control device 3 creates, by using the appearance inspection result including the information regarding the defective section, a repair welding program for performing correction such as repair on a defective portion. The inspection control device 3 transmits the repair welding program and the appearance inspection result in association with each other to the host device 1 or the robot control device 2.

The inspection control device 3 scans an appearance of the workpiece Wk based on an appearance scanning execution command for scanning the workpiece Wk transmitted via the host device 1, the offline teaching device 5, or the robot control device 2. The inspection control device 3 transmits input data (for example, point cloud data capable of specifying the three-dimensional shape of the workpiece Wk) related to the shape of the workpiece Wk acquired by the sensor 4 as a result of the appearance scanning to the offline teaching device 5. The inspection control device 3 may convert the shape of the workpiece Wk into a detectable data format by the offline teaching device 5, and transmit the input data related to the shape of the workpiece Wk after the conversion to the offline teaching device 5.

The sensor 4 is connected to the inspection control device 3 so as to allow data communication therebetween. The sensor 4 is attached to the welding robot MC1, and executes three-dimensional scanning of the workpiece Wk or a stage STG (see FIG. 2) on which the workpiece Wk is placed in accordance with driving of the manipulator 200 based on control of the robot control device 2. The sensor 4 acquires data on the three-dimensional shape of the workpiece Wk placed on the stage STG or data on the three-dimensional shape (for example, point cloud data, mesh data, and the like) capable of specifying a shape, a size, a position, and the like of the stage STG on which the workpiece Wk is placed in accordance with the driving of the manipulator 200 based on the control of the robot control device 2, and transmits the data on the three-dimensional shape to the inspection control device 3.

The monitor MN2 may be formed using a display device such as an LCD or an organic EL. The monitor MN2 displays, for example, a screen showing a notification indicating that the bead appearance inspection is completed or the notification and a result of the bead appearance inspection, which is output from the inspection control device 3. In addition, a speaker (not shown) may be connected to the inspection control device 3 instead of the monitor MN2 or together with the monitor MN2, and the inspection control device 3 may output, via the speaker, a sound indicating a content of the notification indicating that the appearance inspection is completed or the notification and the bead appearance inspection result.

The offline teaching device 5 is connected to the robot control device 2, the inspection control device 3, the monitor MN3, and the input device UI3 so as to allow data communication therebetween. The offline teaching device 5 stores, as setting information, the welding line position information for each workpiece Wk for which a teaching program is to be created or has been created. In addition, the offline teaching device 5 constructs a virtual production facility (for example, a virtual welding robot, a virtual workpiece, a virtual stage, or the like), and creates a welding operation teaching program and a scanning operation teaching program of the workpiece Wk based on a control command and various kinds of data transmitted from the input device UI3, data transmitted from the teach pendant TP via the robot control device 2, various kinds of data output from the robot control device 2 or the inspection control device 3, or the like. The offline teaching device 5 transmits the created welding operation teaching program and the created scanning operation teaching program to the robot control device 2. The created scanning operation teaching program may be transmitted not only to the robot control device 2 but also to the inspection control device 3. In addition, the offline teaching device 5 stores the created welding operation teaching program and the created scanning operation teaching program for each workpiece Wk.

The welding line position information referred to herein is information indicating a position of a welding line formed on the workpiece Wk.

In addition, the welding operation teaching program referred to herein is a program that is created based on the welding line and causes the welding robot MC1 to execute the main welding. The welding operation teaching program is created including information on a position, a distance, and an angle (posture) of a welding torch 400 for executing various operations (for example, approach, retraction, avoidance, and welding) for subjecting the main welding to the workpiece Wk using the welding torch 400, and information on welding conditions and the like.

In addition, the scanning operation teaching program referred to herein is a program that is created based on the welding line and causes the welding robot MC1 to execute the appearance inspection on at least one weld bead created by the main welding. The scanning operation teaching program is created including information on a position, a distance, and an angle (posture) of the sensor 4 for executing various operations (for example, approach, retraction, avoidance, and scanning) for executing the appearance inspection on the created weld bead using the sensor 4.

The monitor MN3 may be formed using a display device such as an LCD or an organic EL. The monitor MN3 displays an image of the virtual production facility (for example, a virtual welding robot, a virtual workpiece, and a virtual stage) transmitted from the offline teaching device 5, and displays an operation trajectory of the welding torch 400 based on the welding operation teaching program, an operation trajectory of the sensor 4 based on the scanning operation teaching program, and the like. In addition, the monitor MN3 displays an image in which the operation trajectory of the sensor 4 or the operation trajectory of the welding torch 400 is superimposed on the image of the virtual production facility transmitted from the offline teaching device 5.

The input device UI3 is a user interface that detects an input operation of the user and outputs the input operation to the host device 1, and may be formed using, for example, a mouse, a keyboard, or a touch panel. The input device UI3 receives input operations of welding line position information, welding setting information, scanning setting information, a 3D model, and the like of the workpiece Wk used for creating the scanning operation teaching program and the welding operation teaching program. Here, the monitor MN3 and the input device UI3 as referred herein may be an integrally formed terminal device P3 (for example, a PC, a notebook PC, or a tablet terminal).

The teach pendant TP is connected to the robot control device 2 such that data can be transmitted and received between the teach pendant TP and the robot control device 2. The teach pendant TP transmits the welding line position information defined by a user operation using the actual welding robot MC1 and the workpiece Wk to the robot control device 2. The robot control device 2 stores the welding line position information transmitted from the teach pendant TP in a memory 22 (see FIG. 2) and transmits the position information to the offline teaching device 5.

FIG. 2 is a diagram showing an internal configuration example of the inspection control device 3, the robot control device 2, the host device 1, and the offline teaching device 5 according to an embodiment. In order to make the description easy to understand, illustration of the monitor MN1 and MN2 and the input interface UI1 is omitted in FIG. 2. The workpiece Wk shown in Fig. 2 is a workpiece to be subjected to the bead appearance inspection. The workpiece Wk may be a workpiece produced by the main welding, or a so-called repair workpiece that has been repaired one or more times by repair welding.

Under the control of the robot control device 2, the welding robot MC1 executes a main welding process based on the welding operation teaching program using the welding torch 400, a bead appearance inspection process based on the scanning operation teaching program using the sensor 4, and the like. In addition, the welding robot MC1 performs the appearance scanning of the workpiece Wk using the sensor 4 in order to acquire the appearance shape of the workpiece Wk used for creating the welding operation teaching program and the scanning operation teaching program. The welding robot MC1 executes, for example, arc welding in the main welding process. However, the welding robot MC1 may execute welding (for example, laser welding and gas welding) other than the arc welding. In this case, although not shown, a laser head, instead of the welding torch 400, may be connected to a laser oscillator via an optical fiber. The welding robot MC1 is a configuration including at least the manipulator 200, the wire feeding device 300, a welding wire 301, and the welding torch 400.

The manipulator 200 includes an articulated arm, and moves each arm based on a control signal from a robot control unit 24 of the robot control device 2. Accordingly, the manipulator 200 can change a position relation (for example, an angle of the welding torch 400 relative to the workpiece Wk) between the workpiece Wk and the welding torch 400 and a position relation between the workpiece Wk and the sensor 4 by driving the arm.

The wire feeding device 300 controls a feeding speed of the welding wire 301 based on the control signal from the robot control device 2. The wire feeding device 300 may include a sensor (not shown) that can detect a remaining amount of the welding wire 301. Based on an output of the sensor, the robot control device 2 can detect that the main welding process is completed.

The welding wire 301 is held by the welding torch 400. When electric power is supplied from a power supply device 500 to the welding torch 400, an arc is generated between a distal end of the welding wire 301 and the workpiece Wk, and the arc welding is executed. It should be noted that illustration and description of a configuration and the like for supplying shielding gas to the welding torch 400 are omitted for the convenience of description.

The host device 1 generates execution commands for various processes of the main welding or the bead appearance inspection by using the welding-related information input or set in advance by the user, and transmits the execution commands to the robot control device 2. As described above, when the sensor 4 is integrally attached to the welding robot MC1, the bead appearance inspection execution command is transmitted to both the robot control device 2 and the inspection control device 3. The host device 1 is a configuration including at least a communication unit 10, a processor 11, and a memory 12.

The communication unit 10 is connected to the robot control device 2 and the external storage ST so as to allow data communication therebetween. The communication unit 10 transmits, to the robot control device 2, the execution commands for various processes of the main welding or the bead appearance inspection generated by the processor 11. The communication unit 10 receives the main welding completion report and the appearance inspection report that are transmitted from the robot control device 2, and outputs the main welding completion report and the appearance inspection report to the processor 11. The main welding execution command may include, for example, a control signal for controlling each of the manipulator 200, the wire feeding device 300, and the power supply device 500 included in the welding robot MC1.

The processor 11 is formed by using, for example, a central processing unit (CPU) or a field programmable gate array (FPGA), and executes various processing and controls in cooperation with the memory 12. Specifically, the processor 11 functionally implements a cell control unit 13 by referring to a program stored in the memory 12 and executing the program.

The memory 12 includes, for example, a random access memory (RAM) as a work memory used when processing of the processor 11 is executed, and a read only memory (ROM) that stores a program defining the processing of the processor 11. Data generated or acquired by the processor 11 is temporarily stored in the RAM. The program that defines the processing of the processor 11 is written into the ROM. In addition, the memory 12 separately stores the data on the welding-related information read out from the external storage ST, the status of the workpiece, and data on the workpiece information of the workpiece (see description below) transmitted from the robot control device 2.

The cell control unit 13 generates, based on the welding-related information stored in the external storage ST, an execution command for executing the main welding, the bead appearance inspection on the workpiece Wk, appearance scanning of the workpiece Wk, or the repair welding. In addition, the cell control unit 13 creates a main welding program at the time of main welding, an appearance inspection program related to driving of the welding robot MC1 at the time of bead appearance inspection on the workpiece Wk, or an appearance scanning program related to driving of the welding robot MC1 at the time of appearance scanning based on the welding-related information stored in the external storage ST and the welding operation teaching program and the scanning operation teaching program that are created by the offline teaching device 5 and transmitted from the robot control device 2. Further, the cell control unit 13 creates an execution command for the created programs. The appearance inspection program and the appearance scanning program may be created for each workpiece Wk in advance and stored in the external storage ST. In this case, the cell control unit 13 reads out and acquires various programs from the external storage ST. The cell control unit 13 may generate different execution commands for various processes of main welding to be executed by the welding robot MC1. The execution commands for the main welding appearance inspection and the appearance scanning generated by the cell control unit 13 are transmitted to the corresponding robot control device 2 or each of the robot control device 2 and the inspection control device 3 via the communication unit 10.

The robot control device 2 refers to a corresponding program based on the execution command for the main welding, the bead appearance inspection, or the appearance scanning that is transmitted from the host device 1. The robot control device 2 controls the welding robot MC1 (for example, the sensor 4, the manipulator 200, the wire feeding device 300, and the power supply device 500) based on the referred program. The robot control device 2 is a configuration including at least a communication unit 20, a processor 21, and a memory 22.

The communication unit 20 is connected to the host device 1, the inspection control device 3, the welding robot MC1, the offline teaching device 5, and the teach pendant TP so as to allow data communication therebetween. Although illustration is simplified in FIG. 2, data is transmitted and received between the robot control unit 24 and the manipulator 200, between the robot control unit 24 and the wire feeding device 300, and between a power supply control unit 25 and the power supply device 500 via the communication unit 20. The communication unit 20 receives the execution command for the main welding or the bead appearance inspection that is transmitted from the host device 1. The communication unit 20 receives the welding line position information, the welding operation teaching program, and the scanning operation teaching program transmitted from the offline teaching device 5. The communication unit 20 transmits the workpiece information on the workpiece produced by the main welding to the host device 1.

Here, the workpiece information not only includes an ID of the workpiece but also includes at least an ID, a name, and a welding portion of an original workpiece used in the main welding, and a welding condition at the time of executing the main welding.

The processor 21 is formed using, for example, a CPU or an FPGA, and executes various processing and controls in cooperation with the memory 22. Specifically, the processor 21 functionally implements a main welding program creation unit 23, the robot control unit 24, and the power supply control unit 25 by referring to a program stored in the memory 22 and executing the program. In addition, the processor 21 executes, based on a main welding program generated by the main welding program creation unit 23, calculation of a parameter for controlling the welding robot MC1 (specifically, each of the manipulator 200, the wire feeding device 300, and the power supply device 500) controlled by the robot control unit 24.

The memory 22 includes, for example, a RAM as a work memory used when processing of the processor 21 is executed, and a ROM that stores a program defining the processing of the processor 21. Data generated or acquired by the processor 21 is temporarily stored in the RAM. The program defining the processing of the processor 21 is written into the ROM. The memory 22 stores data on an execution command for the main welding, the bead appearance inspection, or the appearance scanning transmitted from the host device 1, welding-related information in which workpiece information on the workpiece Wk produced by the main welding and the welding line position information are associated with each other, the welding line position information transmitted from the teach pendant TP, and the like. The welding-related information including the workpiece information on the workpiece Wk to which the welding operation teaching program and the scanning operation teaching program are transmitted from the offline teaching device 5 may include the welding operation teaching program and the scanning operation teaching program, the welding line position information used to create the welding operation teaching program and the scanning operation teaching program, the welding operation setting information, and the scanning operation setting information.

The main welding program creation unit 23 creates a main welding program for the main welding to be executed by the welding robot MC1, based on the main welding execution command transmitted from the host device 1 via the communication unit 20, by using the workpiece information on each of the plurality of original workpieces included in the execution command (for example, an ID, a name, and a workpiece coordinate system of a workpiece, information on an original workpiece, and welding line position information) and the welding operation teaching program associated with the workpiece information. The main welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the main welding. It should be noted that the main welding program may be stored in the processor 21 or may be stored in the RAM of the memory 22.

The robot control unit 24 generates a control signal for driving the welding robot MC1 (specifically, the sensor 4, the manipulator 200, the wire feeding device 300, and the power supply device 500) based on the main welding program generated by the main welding program creation unit 23. The robot control unit 24 transmits the generated control signal to the welding robot MC1.

The robot control unit 24 drives each of the manipulator 200 and the sensor 4 of the welding robot MC1 based on the scanning operation teaching program (that is, the appearance inspection program) transmitted from the offline teaching device 5. Accordingly, the sensor 4 attached to the welding robot MC 1 moves in accordance with the operation of the welding robot MC1, scans the weld bead of the workpiece Wk to acquire input data (for example, point cloud data capable of specifying the three-dimensional shape of the weld bead) related to the shape of the weld bead, and scans the workpiece Wk to acquire input data related to the shape of the workpiece Wk (for example, point cloud data capable of specifying the three-dimensional shape of the workpiece Wk).

The power supply control unit 25 drives the power supply device 500 based on a calculation result of the main welding program generated by the main welding program creation unit 23.

The inspection control device 3 controls, based on the bead appearance inspection execution command transmitted from the host device 1, the processing of the bead appearance inspection and the appearance scanning on the workpiece Wk produced by the main welding executed by the welding robot MC1 or the workpiece Wk repaired by the repair welding executed one or more times. The bead appearance inspection is, for example, an inspection of whether a weld bead formed on the workpiece Wk satisfies a predetermined welding standard (for example, a welding quality standard required by each user), and is formed by the inspection determination described above. The inspection control device 3 determines (inspects) whether an appearance shape of a weld bead formed on the workpiece Wk satisfies a predetermined welding standard based on the input data (for example, point cloud data capable of specifying a three-dimensional shape of the weld bead) related to the shape of the weld bead acquired by the sensor 4. The inspection control device 3 transmits the input data related to the shape of the weld bead acquired by the sensor 4 or the input data related to the shape of the workpiece Wk to the offline teaching device 5. The inspection control device 3 is a configuration including at least a communication unit 30, a processor 31, a memory 32, and an inspection result storage unit 33.

The communication unit 30 is connected to the host device 1, the robot control device 2, the sensor 4, and the offline teaching device 5 so as to allow data communication therebetween. Although illustration is simplified in FIG. 2, data is transmitted and received between a shape detection control unit 35 and the sensor 4 via the communication unit 30. The communication unit 30 receives the bead appearance inspection execution command transmitted from the host device 1. The communication unit 30 transmits an inspection determination result of the bead appearance inspection using the sensor 4 to the host device 1, and transmits three-dimensional shape data of the weld bead acquired by the sensor 4 to the offline teaching device 5.

The processor 31 is formed using, for example, a CPU or an FPGA, and executes various processing and controls in cooperation with the memory 32. Specifically, the processor 31 functionally implements a determination threshold storage unit 34, the shape detection control unit 35, a data processing unit 36, an inspection result determination unit 37, and a repair welding program creation unit 38 by referring to a program stored in the memory 32 and executing the program.

The memory 32 includes, for example, a RAM as a work memory used when processing of the processor 31 is executed, and a ROM that stores a program defining the processing of the processor 31. Data generated or acquired by the processor 31 is temporarily stored in the RAM. The program defining the processing of the processor 31 is written into the ROM. In addition, the memory 32 may store the scanning operation teaching program transmitted from the offline teaching device 5 and the workpiece information in association with each other.

The inspection result storage unit 33 is formed using, for example, a hard disk or a solid state drive. The inspection result storage unit 33 stores data indicating a result of the bead appearance inspection on the welding portion of the workpiece Wk (for example, a workpiece or a repair workpiece) as an example of the data generated or acquired by the processor 31. The data indicating the result of the bead appearance inspection is generated by, for example, the inspection result determination unit 37 (specifically, any of a first inspection determination unit 371, a second inspection determination unit 372 to an Nth inspection determination unit 37N included in the inspection result determination unit 37).

The determination threshold storage unit 34 is formed by, for example, a cache memory provided in the processor 31, is set in advance by a user operation, and stores information on thresholds (for example, a threshold set for each type of welding failure) corresponding to the welding portion and the bead appearance inspection processing of each of the first inspection determination unit 371 to the Nth inspection determination unit 37N included in the inspection result determination unit 37. The thresholds are, for example, an allowable range of a positional deviation of the weld bead, thresholds of a length, a height, and a width of the weld bead, and thresholds of a perforation, a pit, an undercut, and a sputtering. The determination threshold storage unit 34 may store, as the thresholds during the bead appearance inspection after repair welding, an allowable range (for example, a minimum allowable value or a maximum allowable value) that satisfies a minimum welding standard (quality) required by a customer or the like. The thresholds are used in the processing of determining whether inspection results created by the first inspection determination unit 371 and the second inspection determination unit 372 to the Nth inspection determination unit 37N included in the inspection result determination unit 37 are acceptable for the bead appearance inspection. Further, the determination threshold storage unit 34 may store an upper limit value of the number of bead appearance inspections for each welding portion. Accordingly, in a case where the number of times a defective portion is corrected by the repair welding exceeds a predetermined upper limit value, the inspection control device 3 determines that the correction on the defective portion by the automatic repair welding of the welding robot MC1 is difficult or impossible, and can reduce a decrease in an operation rate of the welding system 100.

The shape detection control unit 35 acquires the input data (for example, point cloud data capable of specifying the three-dimensional shape of the weld bead) related to the shape of the weld bead acquired and transmitted by the sensor 4 based on the bead appearance inspection execution command for the welding portion of the workpiece Wk (for example, the workpiece) transmitted from the host device 1. In addition, the shape detection control unit 35 acquires the input data (for example, point cloud data capable of specifying the three-dimensional shape of the workpiece Wk) related to the shape of the workpiece Wk acquired and transmitted by the sensor 4 based on the appearance scanning execution command for the workpiece Wk (for example, the workpiece) transmitted from the host device 1. Specifically, when the sensor 4 reaches a position where the weld bead or the workpiece Wk can be imaged (in other words, the three-dimensional shape of the welding portion or the workpiece Wk can be detected) in accordance with the driving of the manipulator 200 by the robot control device 2 described above, the shape detection control unit 35 causes the sensor 4 to emit, for example, a laser beam to acquire the input data related to the shape of the weld bead or the workpiece Wk. Upon receiving the input data (see description above) acquired by the sensor 4, the shape detection control unit 35 passes the input data to the data processing unit 36.

When the input data (see description above) related to the shape of the weld bead is received from the shape detection control unit 35, the data processing unit 36 converts the input data into a data format suitable for first inspection determination by the inspection result determination unit 37, and converts the input data into a data format suitable for each of second inspection determination to Nth inspection determination by the inspection result determination unit 37. The conversion of the data format may include correction processing of removing unnecessary point cloud data (for example, noise) included in the input data (that is, point cloud data) as so-called preprocessing, and the above preprocessing may be omitted for the first inspection determination. The data processing unit 36 generates image data indicating the three-dimensional shape of the weld bead by setting a data format suitable for the first inspection determination and executing statistical processing on the input shape data, for example. The data processing unit 36 may perform edge enhancement correction in which a peripheral portion of the weld bead is enhanced in order to enhance the position and the shape of the weld bead as data for the first inspection determination. The data processing unit 36 may count the number of times the bead appearance inspection is executed for each welding failure portion, and determine that it is difficult or impossible to correct the welding failure portion by automatic repair welding in a case where a welding inspection result is not favorable even when the number of times of the bead appearance inspection exceeds the number of times stored in advance in the memory 32. In this case, the inspection result determination unit 37 generates an alert screen including a position of the welding failure portion and a type of the welding failure (for example, a perforation, a pit, an undercut, a sputtering, or a protrusion), and transmits the generated alert screen to the host device 1 via the communication unit 30. The alert screen transmitted to the host device 1 is displayed on the monitor MN1. The alert screen may be displayed on the monitor MN2.

The data processing unit 36 uses the threshold for bead appearance inspection stored in the determination threshold storage unit 34 to execute the bead appearance inspection based on comparison between the input data related to the shape of the weld bead acquired by the sensor 4 and the master data of a non-defective workpiece predetermined for each workpiece. The data processing unit 36 creates an appearance inspection report including a defect determination result as an inspection determination result (that is, information indicating presence or absence of a defect that requires repair welding) and information regarding a defective section for each defective portion and stores the appearance inspection report in the inspection result storage unit 33, and transmits the appearance inspection report to the host device 1 or the robot control device 2 via the communication unit 30. In addition, when it is determined that there is no defective portion that requires repair welding in the workpiece Wk to be inspected, the data processing unit 36 creates an appearance inspection report including an inspection determination result indicating that the result is acceptable for the bead appearance inspection and stores the appearance inspection report in the inspection result storage unit 33, and transmits the appearance inspection report to the host device 1 via the communication unit 30.

In addition, when the input data (see description above) related to the shape of the workpiece Wk is acquired from the shape detection control unit 35, the data processing unit 36 converts the input data into a data format suitable for the calculation processing executed by the offline teaching device 5. The conversion of the data format may include, as so-called preprocessing, correction processing of removing unnecessary point cloud data (for example, noise) included in the input data (that is, point cloud data), or may be processing of generating a 3D model of the workpiece Wk. In addition, the data processing unit 36 may perform edge enhancement correction in which the position and the shape of the workpiece Wk are enhanced and the peripheral portion of the workpiece Wk is enhanced. The data processing unit 36 transmits the input data related to the shape of the workpiece Wk after conversion to the offline teaching device 5 via the communication unit 30.

The inspection result determination unit 37 may execute a total of N (N is an integer of 2 or more) types of bead appearance inspection (for example, each of the first inspection determination and the second inspection determination described above). Specifically, the inspection result determination unit 37 includes the first inspection determination unit 371 and the second inspection determination unit 372 to the Nth inspection determination unit 37N. Although the description will be made assuming that N = 2 in order to facilitate understanding of the description in FIG. 2, the same applies to an integer of N = 3 or more.

The first inspection determination unit 371 performs the first inspection determination (that is, the bead appearance inspection based on comparison between the input data related to the shape of the weld bead acquired by the sensor 4 and the master data of the non-defective workpiece predetermined for each workpiece), and inspects shape reliability of the weld bead (for example, whether the weld bead is along a straight or curved welding line), a bead crack, and a bead positional deviation. The first inspection determination unit 371 performs comparison (so-called image processing) between the master data of the non-defective workpiece and the data (for example, image data generated based on the point cloud data) subjected to the data conversion by the data processing unit 36 for the first inspection determination. Therefore, the first inspection determination unit 371 can inspect the shape reliability of the weld bead, the bead crack, and the bead positional deviation with high accuracy. The first inspection determination unit 371 calculates an inspection score indicating an inspection result of the shape reliability of the weld bead, the bead crack, and the bead positional deviation, and creates a calculated value of the inspection score as a first inspection result. Further, the first inspection determination unit 371 compares the created first inspection result with a threshold for the first inspection result stored in the memory 32. The first inspection determination unit 371 outputs the first inspection result including information on a comparison result (that is, whether the acquired first inspection result is acceptable or unacceptable for the bead appearance inspection) to a comprehensive determination unit 370 or the second inspection determination unit 372 to the Nth inspection determination unit 37N.

The second inspection determination unit 372 to the Nth inspection determination unit 37N respectively execute the second inspection determination (that is, the bead appearance inspection of forming neural networks based on k = (N - 1) types of artificial intelligence and determining presence or absence of a welding failure based on AI targeting the input data related to the shape of the weld bead acquired by the sensor 4 or the input data after preprocessing the input data by the data processing unit 36), and inspect presence or absence of the perforation, pit, undercut, sputtering, and protrusion of the weld bead. The perforation, pit, undercut, sputtering, and protrusion of the weld bead are merely exemplified, and the defect type inspected by the Nth inspection determination unit 37N is not limited thereto. When it is determined that the welding failure of the corresponding type is detected, each of the second inspection determination unit 372 to the Nth inspection determination unit 37N specifies the position of the weld bead at which the welding failure is detected. Each of the second inspection determination unit 372 to the Nth inspection determination unit 37N determines presence or absence of a welding failure using a learning model (AI) obtained in advance by learning processing for each type of welding failure or each group of types of welding failure. Accordingly, each of the second inspection determination unit 372 to the Nth inspection determination unit 37N can inspect, for example, the presence or absence of the perforation, pit, undercut, sputtering, and protrusion of the weld bead with high accuracy. Each of the second inspection determination unit 372 to the Nth inspection determination unit 37N does not execute the inspection on the shape reliability of the weld bead, the bead crack, and the bead positional deviation executed by the first inspection determination unit 371. The second inspection determination unit 372 to the Nth inspection determination unit 37N calculate an inspection result (in other words, an inspection score indicating an occurrence probability) of the perforation, pit, undercut, sputtering, and protrusion of the weld bead, and create a calculated value of the inspection score as a second inspection determination result.

The inspection result determination unit 37 may determine whether the repair welding by the welding robot MC1 is possible (in other words, whether the repair welding by the welding robot MC1 is favorable or manual repair welding is favorable) based on the inspection result (inspection score) included in the first inspection result or the second inspection result described above, and output a determination result included in the appearance inspection report described above.

The repair welding program creation unit 38 creates a repair welding program for the workpiece Wk to be executed by the welding robot MC1 by using the appearance inspection report of the workpiece Wk created by the data processing unit 36. The repair welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the repair welding. It should be noted that the generated repair welding program may be stored in the processor 31, may be stored in the RAM of the memory 32, or may be transmitted to the host device 1 or the robot control device 2 via the communication unit 30 in association with the appearance inspection report.

The repair welding program creation unit 38 creates a repair welding program for the workpiece Wk (for example, a workpiece or a repair workpiece) to be executed by the welding robot MC1 using the appearance inspection report of the workpiece Wk (for example, a workpiece or a repair workpiece) created by the inspection result determination unit 37 and the workpiece information (for example, information such as coordinates indicating a position of a detection point of a welding failure of the workpiece or the repair workpiece). The repair welding program may include various parameters such as a welding current, a welding voltage, an offset amount, a welding speed, and a posture of the welding torch 400 for controlling the power supply device 500, the manipulator 200, the wire feeding device 300, the welding torch 400, and the like during the execution of the repair welding. The generated repair welding program may be stored in the processor 31 or may be stored in the RAM of the memory 32.

The sensor 4 is, for example, a three-dimensional shape sensor, is attached to a distal end of the welding robot MC1, and acquires a plurality of pieces of point cloud data capable of specifying the shape of the workpiece Wk or the welding portion on the workpiece Wk. The sensor 4 generates point cloud data capable of specifying the three-dimensional shape of the welding portion based on the acquired point cloud data, and transmits the point cloud data to the inspection control device 3. When the sensor 4 is not attached to the distal end of the welding robot MC1 and is disposed separately from the welding robot MC1, the sensor 4 may include a laser light source (not shown) configured to scan the workpiece Wk or a welding portion on the workpiece Wk (for example, a workpiece or a repair workpiece) based on the position information of the workpiece Wk or the welding portion transmitted from the inspection control device 3, and a camera (not shown) that is disposed in a manner of capable of imaging an imaging region including a periphery of the workpiece Wk or the welding portion and that images a reflection trajectory (that is, a shape line of the welding portion) of reflected laser light among laser light emitted onto the workpiece Wk or the welding portion. In this case, the sensor 4 transmits, to the inspection control device 3, the shape data of the workpiece Wk or the welding portion (in other words, the image data of the workpiece Wk or the weld bead) based on the laser light imaged by the camera. The camera described above includes at least a lens (not shown) and an image sensor (not shown). The image sensor is, for example, a solid-state imaging element such as a charge coupled device (CCD) or a complementary metal oxide semiconductor (CMOS), and converts an optical image formed on an imaging surface into an electric signal.

The offline teaching device 5 is connected to the robot control device 2, the inspection control device 3, the monitor MN3, and the input device UI3 so as to allow data communication therebetween. The offline teaching device 5 creates a welding operation teaching program and a scanning operation teaching program of the workpiece Wk based on various kinds of data such as the welding line position information, the welding operation setting information, and the scanning operation setting information transmitted from the input device UI3, and the welding line position information transmitted from the teach pendant TP via the robot control device 2. The offline teaching device 5 includes a communication unit 50, a processor 51, a memory 52, and an input and output unit 53.

The communication unit 50 is connected to the robot control device 2, the inspection control device 3, the input device UI3, and the monitor MN3 so as to allow data communication therebetween. The communication unit 50 transmits, to the robot control device 2, the created welding operation teaching program and the created scanning operation teaching program and various kinds of data (for example, welding line position information, welding operation setting information, scanning operation setting information, and workpiece information on the workpiece Wk) used for creating the welding operation teaching program and the scanning operation teaching program in association with each other.

The processor 51 is formed using, for example, a CPU or an FPGA, and executes various processing and controls in cooperation with the memory 52. Specifically, the processor 51 functionally implements a 3D calculation unit 54 and a program creation unit 55 by referring to the program stored in the memory 52 and executing the program.

The memory 52 includes, for example, a RAM as a work memory used when processing of the processor 51 is executed, and an ROM that stores a program defining the processing of the processor 51. Data generated or acquired by the processor 51 is temporarily stored in the RAM. The program defining the processing of the processor 51 is written into the ROM. In addition, the memory 52 stores the welding operation teaching program, the scanning operation teaching program, and the workpiece information, which are created by the program creation unit 55, in association with one another.

The input and output unit 53 acquires the execution command, the 3D model of the workpiece Wk, the welding operation setting information, and the scanning operation setting information transmitted from the input device UI3, and the welding line position information transmitted from the inspection control device 3, the input device UI3, or the robot control device 2, and outputs the acquired information to the processor 51. In addition, the input and output unit 53 transmits, to the monitor MN3, an image in which the operation trajectory of the sensor 4 or the operation trajectory of the welding torch 400 is superimposed on an image of a virtual production facility (for example, a virtual welding robot, a virtual workpiece, or a virtual stage) generated by the 3D calculation unit 54 and an image of a virtual production facility transmitted from the offline teaching device 5.

The 3D calculation unit 54 virtually forms a production facility necessary for executing the main welding process and the appearance inspection process of the workpiece Wk based on, for example, the input data (that is, three-dimensional shape data) related to the shape of the workpiece Wk or the weld bead, the data of a 3D model of the workpiece Wk, the workpiece information of the workpiece Wk, and the data related to a production facility (for example, position information of the stage STG and the robot information or the position information of the welding robot MC1). The 3D calculation unit 54 converts the data of the virtually formed production facility into image data, outputs the image data to the input and output unit 53, and displays the image data on the monitor MN3.

In addition, the 3D calculation unit 54 generates image data in which one or more teaching points included in the welding operation teaching program created by the program creation unit, the operation trajectory (specifically, an idle running section, a welding section, and the like) of the welding torch 400, and the like are virtually superimposed on the production facility. The 3D calculation unit 54 generates image data in which one or more teaching points included in the scanning operation teaching program created by the program creation unit, the operation trajectory of the sensor 4 (specifically, an idle running section, a scanning section, and the like), and the like are virtually superimposed on the production facility. The 3D calculation unit 54 converts data on a virtual production facility on which data included in various teaching programs is superimposed into image data, outputs the image data to the input and output unit 53, and displays the image data on the monitor MN3. The 3D calculation unit 54 may generate image data in which the teaching points of the welding operation and the scanning operation, the operation trajectories of the welding torch 400 and the sensor 4 (specifically, an idle running section, a welding section, a scanning section, and the like), and the like are collectively superimposed on a virtual production facility based on the welding operation teaching program and the scanning operation teaching program.

The program creation unit 55 creates the welding operation teaching program and the scanning operation teaching program based on the welding line position information (for example, the data of the 3D model of the workpiece Wk, the input data related to the shape of the workpiece Wk or the weld bead, and coordinate information of a start point and an end point of the welding line), the welding operation setting information, and the scanning operation setting information. The program creation unit 55 includes a welding operation creation unit 551 and a scanning operation creation unit 552.

The welding operation creation unit 551 creates a welding operation teaching program for executing the main welding process on the workpiece Wk based on the input welding line position information and the welding operation setting information. The welding operation teaching program is created based on a workpiece coordinate system ΣWk on a workpiece Wk to be described later. Accordingly, the welding system 100 can more efficiently create a new welding operation teaching program based on a change in a relative position between the workpiece Wk and the welding robot MC1 even when the configuration, relocation, addition, or the like of the production facility is performed. In addition, the welding operation setting information referred to herein may be a group of various parameters necessary for the welding operation, such as various welding conditions of the main welding, and retreat positions of the welding torch 400 before the start of welding and after the end of welding.

The scanning operation creation unit 552 creates a scanning operation teaching program for executing an appearance inspection process of the weld bead generated on the workpiece Wk based on the input welding line position information and the scanning operation setting information. The scanning operation teaching program is created based on a workpiece coordinate system ΣWk on a workpiece Wk to be described later. Accordingly, the welding system 100 can more efficiently create a new scanning operation teaching program based on a change in a relative position between the workpiece Wk and the welding robot MC1 even when the configuration, relocation, addition, or the like of the production facility is performed. In addition, the scanning operation setting information referred to here may be a group of various parameters necessary for the scanning operation of the weld bead, such as a distance between the sensor 4 and the workpiece Wk, a measurement range, and a scanning approach section.

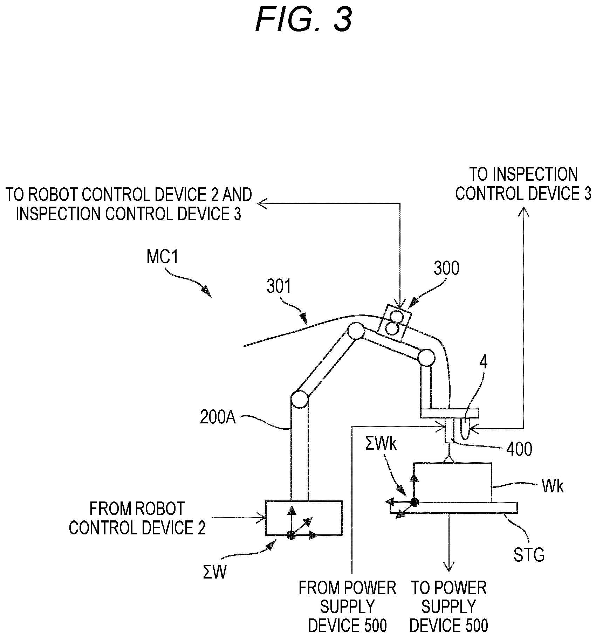

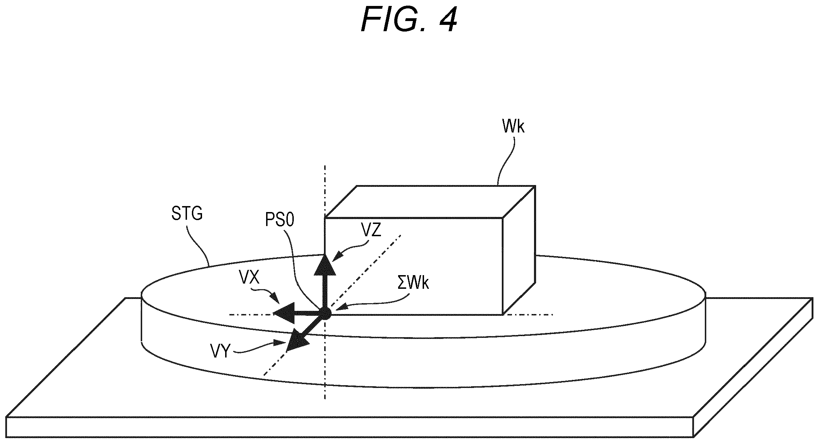

Next, a coordinate system (welding robot coordinate system ΣW) of the welding robot MC1 and a coordinate system (workpiece coordinate system ΣWk) of the workpiece Wk will be described with reference to FIG. 3. FIG. 3 is a diagram illustrating the welding robot coordinate system ΣW and the workpiece coordinate system ΣWk. FIG. 4 is a diagram illustrating the workpiece coordinate system ΣWk.

A relative position relation between the welding robot MC1 and the workpiece Wk is defined using the workpiece coordinate system ΣWk set for the workpiece Wk. The welding robot coordinate system ΣW shown in FIG. 3 is a coordinate system of the welding robot MC1. The workpiece coordinate system ΣWk shown in FIG. 3 is a coordinate system of the workpiece Wk centered on coordinates of a reference point PS0 on the stage STG. Information on the workpiece coordinate system ΣWk is included in the workpiece information and stored.

The coordinate system only needs to be able to specify the position of the workpiece Wk viewed from the welding robot MC1. For example, the coordinate system may be not the workpiece coordinate system ΣWk, and a coordinate system may be set on the stage STG on which the workpiece Wk is placed instead of the workpiece coordinate system ΣWk. In such a case, the position relation of the workpiece Wk viewed from the welding robot MC1 is calculated based on the welding robot coordinate system ΣW and the coordinate system (not shown) of the stage STG. Each of the welding robot coordinate system ΣW and the workpiece coordinate system ΣWk shown in FIG. 3 is an example, and it is needless to say that the present invention is not limited thereto.

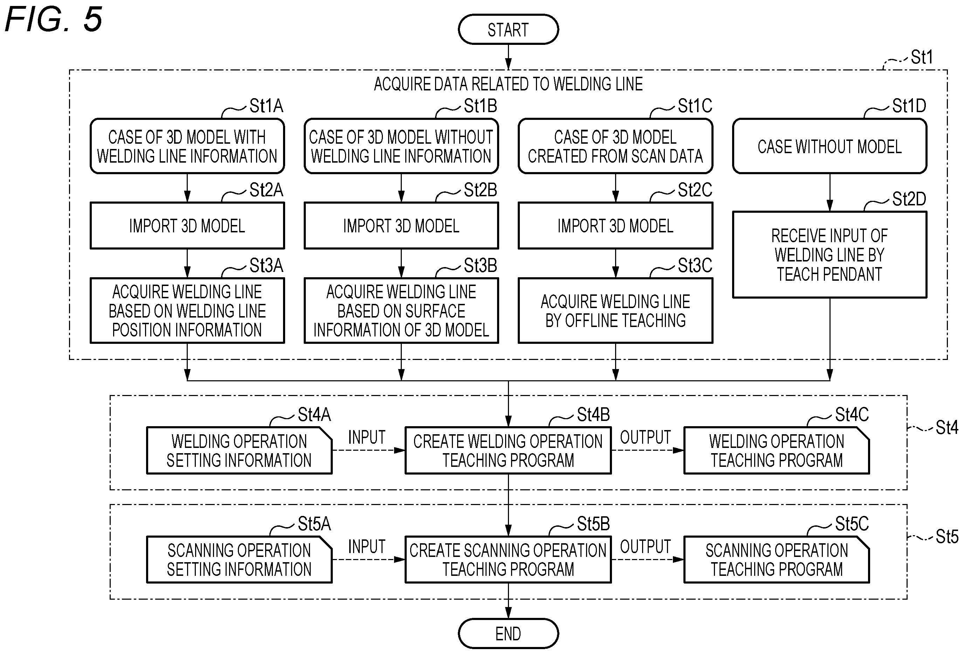

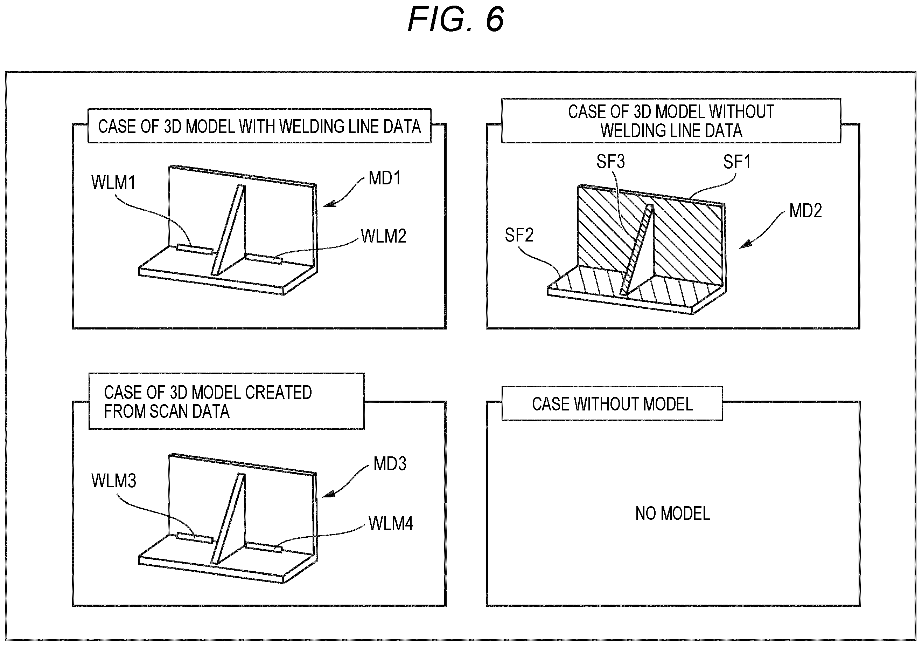

Next, a teaching program initial setting procedure for each of the welding operation and the scanning operation in the embodiment will be described with reference to FIGS. 5 and 6. FIG. 5 is a flowchart illustrating the teaching program initial setting procedure for each of the welding operation and the scanning operation performed by the offline teaching device 5 according to the embodiment. FIG. 6 is a diagram illustrating various kinds of data input to the offline teaching device 5.

The offline teaching device 5 executes initial setting of each of a welding operation teaching program for executing production of the workpiece Wk and a scanning operation teaching program for executing appearance inspection of the generated weld bead based on the execution command transmitted from the host device 1. The offline teaching device 5 acquires data related to the welding line of the workpiece Wk based on data transmitted from any one of the robot control device 2, the inspection control device 3, and the input device UI3 (St1).

Specifically, in the processing of step St1, the offline teaching device 5 receives an input of 3D data (for example, data on a 3D model MD1 shown in FIG. 6) of the workpiece Wk including welding line position information on welding lines WLM1 and WLM2 as the data related to the welding line based on a user operation transmitted from the input device UI3 (St1A), and imports the 3D model input to the processor 51 (St2A). The 3D model MD1 may be the input data related to the shape of the workpiece Wk or the weld bead transmitted from the inspection control device 3. In the 3D model MD1 shown in FIG. 6, an example is shown in which welding line position information on each of a plurality of welding lines WLM1 and WLM2 is included, but it is needless to say that the number of welding lines should be one or more. The welding line in the present embodiment may be a straight line, a curved line, or any line including a straight line and a curved line.

In the processing of step St1, when it is determined that the data related to the welding line is the data on the 3D model MD1 (see FIG. 6) of the workpiece Wk and includes the welding line position information of the welding lines WLM1 and WLM2 (St1A), the offline teaching device 5 may import the 3D model to the processor 51 (St2A).

The offline teaching device 5 acquires a welding line for producing the workpiece Wk based on the welding line position information included in the imported 3D model (St3A).

In the processing of step St1, the offline teaching device 5 receives an input of data on a 3D model MD2 (see FIG. 6) of the workpiece Wk not including the welding line position information as the data related to the welding line based on the user operation transmitted from the input device UI3 (St1B), and imports the 3D model to the processor 51 (St2B). The 3D model MD2 may be the input data related to the shape of the workpiece Wk transmitted from the inspection control device 3.

In the processing of step St1, when it is determined that the data related to the welding line transmitted from the input device UI3 is the data on the 3D model MD2 (see FIG. 6) of the workpiece Wk and does not include the welding line position information (St1B), the offline teaching device 5 may import the 3D model to the processor 51 (St2B).

The offline teaching device 5 acquires a welding line for producing the workpiece Wk based on surface information of the workpiece Wk (for example, information on each of the surfaces SF1, SF2, and SF3 shown in FIG. 6), information on an edge of the workpiece Wk (an edge of each of the surfaces SF1, SF2, and SF3 shown in FIG. 6), and the like included in the imported 3D model (St3B). For example, when the workpiece Wk is composed of two or more original workpieces, the offline teaching device 5 extracts a plurality of contact points (for example, a portion where a surface SF1 and a surface SF2 come into contact with each other) where the two or more original workpieces come into contact with each other, or a plurality of intersection points (for example, a portion where the surface SF1 and the surface SF2 intersect with each other). The offline teaching device 5 acquires a continuous line formed by including at least two or more of the extracted contact points and intersection points, as a changed welding line. Here, the continuous line may be a straight line, a curved line, or any line including a straight line and a curved line.

In the processing of step St1, the offline teaching device 5 receives an input of input data (that is, scan data acquired by scanning by the sensor 4) related to the shape of the weld bead or the workpiece Wk transmitted from the inspection control device 3 as the data related to the welding line (St1C), and imports a 3D model MD3 (see FIG. 6) to the processor 51 (St2C). Here, the scan data is, for example, mesh data.

In the processing of step St1, when it is determined that the data related to the welding line is the input data (that is, the scan data acquired by scanning by the sensor 4) related to the shape of the weld bead or the workpiece Wk transmitted from the inspection control device 3 (St1C), the offline teaching device 5 may import the 3D model MD3 (see FIG. 6) to the processor 51 (St2C).

The offline teaching device 5 transmits and displays the imported 3D model on the monitor MN3, and receives a designation operation on a welding line performed by the user. The input device UI3 receives a user operation of designating each of a plurality of points (that is, positions of welding lines) to be welded in the 3D model of the weld bead displayed on the monitor MN3. The input device UI3 converts each of the plurality of points designated by the user operation into continuous lines WLM3 and WLM4 (see FIG. 6), and transmits the continuous lines WLM3 and WLM4 to the offline teaching device 5. The offline teaching device 5 acquires the continuous lines as the welding line of the workpiece Wk based on continuous line position information transmitted from the input device UI3 (St3C). In the 3D model MD3 shown in FIG. 6, an example is shown in which each of the plurality of continuous lines WLM3 and WLM4 is designated, but it is needless to say that the number of continuous lines should be one or more. Here, the continuous line may be a straight line, a curved line, or any line including a straight line and a curved line.

In the processing of step St1, the offline teaching device 5 acquires an input of data related to the welding line, which is data that cannot be converted into the 3D model, or an input of data related to the welding line, based on the user operation transmitted from the input device UI3 (St1D). In such a case, the offline teaching device 5 acquires the welding line position information corresponding to the data transmitted from the robot control device 2, and acquires the welding line based on the acquired welding line position information (St2D). Here, the welding line position information is taught by the user operation using the actual welding robot MC1, the workpiece Wk, the teach pendant TP, and the like, and is transmitted from the teach pendant TP to the robot control device 2.

In the processing of step St1, when it is determined that the data related to the welding line cannot be converted into the 3D model or the data related to the welding line cannot be acquired (St1D), the offline teaching device 5 may generate a screen for requesting an input of the welding line and display the screen on the monitor MN3. In such a case, the offline teaching device 5 may acquire the welding line based on the welding line position information transmitted from the robot control device 2 (St2D).

Next, the offline teaching device 5 proceeds to the processing of creating a welding operation teaching program (St4). The offline teaching device 5 receives an input of welding operation setting information from the input device UI3 in advance (St4A). The offline teaching device 5 creates a welding operation teaching program based on the welding operation setting information input (transmitted) from the input device UI3 and the welding line (St4B), and transmits (outputs) the created welding operation teaching program to the robot control device 2 (St4C). The offline teaching device 5 may generate image data in which teaching points indicated by the created welding operation teaching program and various operation trajectories of the welding torch 400 are superimposed on a virtual production facility, and transmit the image data to the monitor MN3 to output (display) the image data.

Next, the offline teaching device 5 proceeds to the processing of creating a scanning operation teaching program (St5). Similarly, the offline teaching device 5 receives an input of scanning operation setting information from the input device UI3 in advance (St5A). The offline teaching device 5 creates a scanning operation teaching program based on the scanning operation setting information input (transmitted) from the input device UI3 and the welding line (St5B), and transmits (outputs) the created scanning operation teaching program to each of the robot control device 2 and the inspection control device 3 (St5C). The offline teaching device 5 may generate image data in which teaching points indicated by the created scanning operation teaching program and various operation trajectories of the sensor 4 are superimposed on a virtual production facility, and transmit the image data to the monitor MN3 to output (display) the image data.

As described above, the offline teaching device 5 according to the embodiment can automatically create the welding operation teaching program and the scanning operation teaching program based on the welding line position information. Accordingly, the user can create a teaching program for executing the main welding by the offline teaching device 5 and a teaching program for executing the appearance inspection of the weld bead by teaching the data including the welding line position information (for example, the 3D model, the input data related to the shape of the weld bead or the workpiece Wk) or the welding line position information using the teach pendant TP.

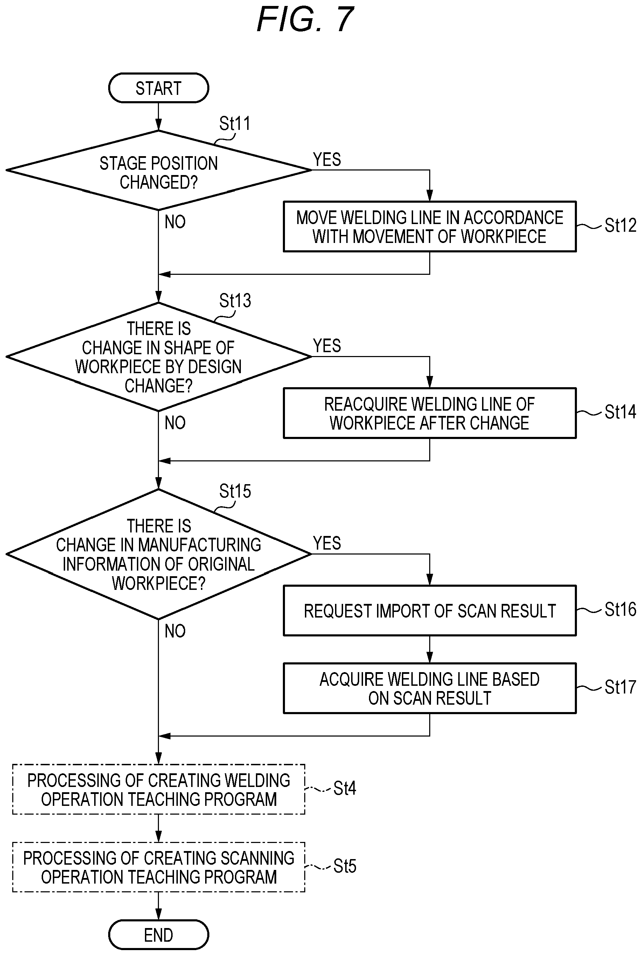

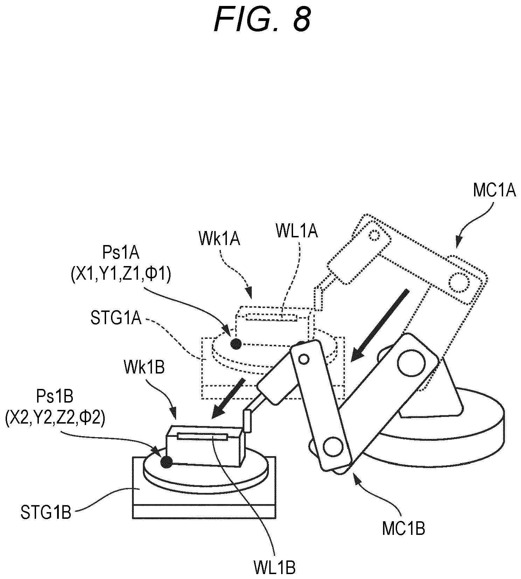

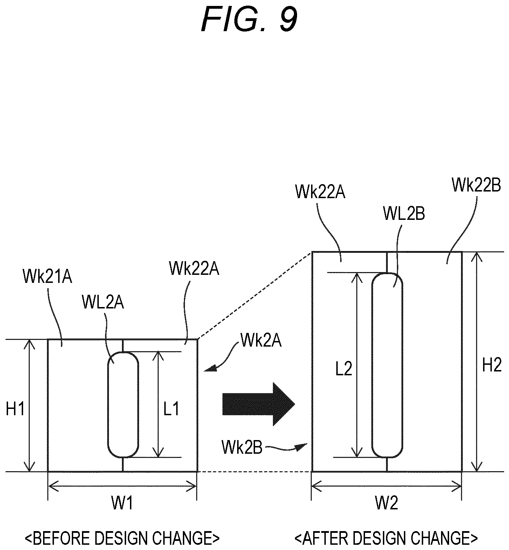

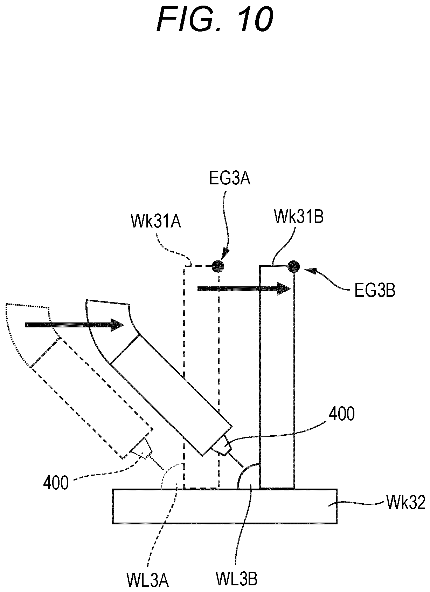

Next, a teaching program update processing procedure of the offline teaching device 5 according to the embodiment will be described with reference to FIGS. 7 to 10. FIG. 7 is a flowchart illustrating the teaching program update processing procedure of the offline teaching device 5 according to the embodiment. FIG. 8 is a diagram illustrating a position change of a stage. FIG. 9 is a diagram illustrating a design change of the workpiece Wk. FIG. 10 is a diagram illustrating a change in machining accuracy of the workpiece Wk due to lot switching of the workpiece Wk.

In the following description of the teaching program update processing, the welding line position information used in the processing of creating the welding operation teaching program and the scanning operation teaching program that have been created is referred to as a "welding line before change", and the welding line position information used in the processing of creating the new welding operation teaching program and the new scanning operation teaching program is referred to as a "welding line after change".

The updating of the teaching program is executed by the offline teaching device 5, and indicates the update (creation) processing of the welding operation teaching program and the scanning operation teaching program executed by the offline teaching device 5 when it is determined that, regarding the workpiece Wk for which the welding operation teaching program and the scanning operation teaching program have been created, there is the lot switching or design change of the workpiece Wk, a configuration change (for example, relocation or addition) of a production facility for producing the workpiece Wk, and a change in the workpiece information on the workpiece Wk, the welding line position information, the welding operation setting information, the scanning operation setting information, and the like.

The teaching program update processing executed by the offline teaching device 5 is not limited to the above-described factors or timing, and may be executed based on, for example, an input of an appearance inspection result (that is, input data related to the shape of the weld bead) of the workpiece Wk produced after the lot switching or design change of the workpiece Wk, the configuration change (for example, relocation or addition) of the production facility for producing the workpiece Wk, and the change in the workpiece information on the workpiece Wk, the welding line position information, the welding operation setting information, the scanning operation setting information, and the like, or may be executed based on an input of an appearance scan result (that is, input data related to the shape of the workpiece Wk) of the workpiece Wk after the change. Accordingly, the offline teaching device 5 can automatically create the welding operation teaching program and the scanning operation teaching program based on the detection of the above-described factors or timing without depending on the user operation.

The offline teaching device 5 may execute the teaching program update processing based on a control command for requesting the updating of the welding operation teaching program and the scanning operation teaching program transmitted from the input device UI3. Accordingly, the offline teaching device 5 can execute the teaching program update processing at a timing desired by the user.

The offline teaching device 5 collates the workpiece information on the workpiece Wk, which is an update target of the teaching program, with the workpiece information on the workpiece Wk for which the teaching program has been created, which is recorded in the memory 52, based on the control command transmitted from the input device UI3, the detection of the above-described factors or timing, or the like. When it is determined that the workpiece Wk is a workpiece Wk for which various teaching programs (that is, the welding operation teaching program and the scanning operation teaching program) have been created based on a collation result, the offline teaching device 5 starts the teaching program update processing shown in FIG. 7. When it is determined that the workpiece Wk is not a workpiece Wk for which various teaching programs (that is, the welding operation teaching program and the scanning operation teaching program) have been created based on the collation result, the offline teaching device 5 executes the teaching program initial setting procedure for each of the welding operation and the scanning operation shown in FIG. 5.

First, the offline teaching device 5 acquires, from any external device of the robot control device 2, the inspection control device 3, and the input device UI3, various kinds of changed data (data related to the welding line) in which at least a part of the workpiece information on the workpiece Wk, the data on the 3D model (that is, the input data related to the shape of the weld bead or the workpiece Wk), the welding line position information, the welding operation setting information, the scanning operation setting information, and the data related to the production facility (for example, position information of each facility), which are used to create the welding operation teaching program and the scanning operation teaching program, is changed. Here, the offline teaching device 5 may acquire only the changed data, or may acquire all the data used to create the welding operation teaching program and the scanning operation teaching program. In order to make the description easy to understand, in the following description, an example will be described in which all the data used to create the welding operation teaching program and the scanning operation teaching program are acquired.

The offline teaching device 5 determines whether the position of the stage STG for fixing the workpiece Wk is changed based on the data related to the production facility included in the data related to the welding line stored in the memory 52 and the data related to the changed production facility (St11). Specifically, the offline teaching device 5 determines whether there is a change in the position relation between the workpiece Wk and the welding robot MC1 due to a configuration change, relocation, addition, or the like of a production facility for producing the workpiece Wk.

In the processing of step St11, if it is determined that the position of the stage STG (here, the position may include a rotation angle) is changed (that is, the position relation between the workpiece Wk and the welding robot MC1 is changed) (St11, YES), the offline teaching device 5 calculates a displacement amount of the position of the stage STG based on the position of the stage STG before the change and the position of the stage STG after the change. The offline teaching device 5 calculates a displacement amount of the relative position between the workpiece Wk and the welding robot MC1 based on the calculated displacement amount of the position of the stage STG. The offline teaching device 5 moves (corrects) the position of the welding line of the workpiece Wk before the change based on the calculated displacement amount of the relative position, and acquires the welding line after the change (St12).

The stage STG may be a non-rotatable table, may be rotatable about one or more axes, or may be movable about two or more axes (for example, an X axis and a Y axis, the X axis, the Y axis, and a Z axis). Here, the processing of steps St11 and St12 will be described with reference to FIG. 8. It is needless to say that the example of changing the position of the stage STG shown in FIG. 8 is merely an example and the present invention is not limited thereto.

Each of a stage STG1A, a workpiece Wk1A, and a welding robot MC1A shown in FIG. 8 indicates the position of the stage before the change. A welding line WL1A is defined based on coordinates (X1, Y1, Z1, Φ1) of a predetermined reference point Ps1A of the workpiece Wk1A.

Each of a stage STG1B, a workpiece Wk1B, and a welding robot MC1B shown in FIG. 8 indicates the position of the stage after the change. The offline teaching device 5 calculates a position of the welding line WL1B based on a displacement amount of the position of the workpiece Wk before and after the change of the position of the stage. Here, the offline teaching device 5 calculates the position of the welding line WL1B based on coordinates (X2, Y2, Z2, Φ2) of a predetermined reference point Ps1B of the workpiece Wk1B after the position of the stage is changed.

On the other hand, in the processing of step St11, if it is determined that the position of the stage STG is not changed (that is, the position relation between the workpiece Wk and the welding robot MC1 is not changed) (St11, NO), the offline teaching device 5 proceeds to the processing of step St13.

The offline teaching device 5 determines whether the shape of the workpiece Wk is changed due to a design change or the like of the workpiece Wk based on the workpiece information on the workpiece Wk, the data on the 3D model, or the welding line position information before the change stored in the memory 52, and the workpiece information on the workpiece Wk after the change, the data on the 3D model, or the welding line position information after the change (St13). Here, the shape of the workpiece Wk includes a change in the size (dimension) of the workpiece Wk.

In the processing of step St13, if it is determined that the shape of the workpiece Wk is changed (St13, YES), the offline teaching device 5 acquires the welding line after the change based on the shape of the workpiece Wk after the change (St14).

Specifically, in the processing of step St14, when it is determined that there is a change in the shape of the workpiece Wk, the offline teaching device 5 executes the same processing as the processing of step St1 shown in FIG. 5 to acquire the welding line after the change. Specifically, the offline teaching device 5 determines whether the changed data acquired as the data related to the welding line is a 3D model including the welding line position information after the change, a 3D model not including the welding line position information after the change, the input data related to the shape of the weld bead or the workpiece Wk acquired by scanning, or data that is not a 3D model. When it is determined that the data related to the welding line is not input, the offline teaching device 5 executes the same processing as that in a case where the data related to the welding line is the data that is not a 3D model.

When it is determined that the data related to the welding line is the 3D model MD1 (see FIG. 6) including the welding line position information after the change, the offline teaching device 5 acquires the welding line after the change based on the welding line position information after the change included in the 3D model MD1.

When it is determined that the data related to the welding line is the 3D model MD2 (see FIG. 6) that does not include the welding line position information after the change, the offline teaching device 5 acquires the welding line after the change based on the surface information of the workpiece Wk (for example, the information on each of the surfaces SF1, SF2, and SF3 shown in FIG. 6), the information on the edge of the workpiece Wk (the edge of each of the surfaces SF1, SF2, and SF3 shown in FIG. 6), and the like included in the 3D model.

When the data related to the welding line is the 3D model generated based on the input data related to the shape of the workpiece Wk acquired by the sensor 4, the offline teaching device 5 generates and transmits a control command for requesting an input of the welding line after the change to the monitor MN3. The offline teaching device 5 acquires the welding line of the workpiece Wk after the change based on the continuous line position information transmitted from the input device UI3. The continuous line position information is designated based on the user operation on the input device UI3.

When the data related to the welding line is not the 3D model, the offline teaching device 5 acquires the welding line after the change based on the welding line position information after the change transmitted from the robot control device 2. When it is determined that the welding line position information after the design change is not included in the 3D model of the workpiece Wk after the design change after acquiring a design change instruction of the workpiece Wk by the user operation, the offline teaching device 5 may generate a screen for requesting the input of the welding line after the change and output the screen to the monitor MN3.

Here, the processing of steps St13 and St14 will be described with reference to FIG. 9. FIG. 9 shows an example in which the shape and the size of the workpiece Wk are changed. It is needless to say that each of workpieces Wk2A and Wk2B and each of original workpieces Wk21A, Wk22A, Wk21B, and Wk22B shown in FIG. 9 are merely examples, and the present invention is not limited thereto.

The workpiece Wk2A shown in FIG. 9 is a workpiece before the design change. The workpiece Wk2A has a substantially rectangular shape and has a width W1 and a height H1. The workpiece Wk2A is a workpiece that is manufactured by subjecting each of the two original workpieces Wk21A and Wk22A to main welding with a welding line WL2A having a length L1.

The workpiece Wk2B shown in FIG. 9 is a workpiece after the design change. The workpiece Wk2B has a substantially rectangular shape and has a width W2 and a height H2. The workpiece Wk2B is a workpiece that is manufactured by subjecting each of the two original workpieces Wk21B and Wk22B to main welding with a welding line WL2B having a length L2.

When data on a 3D model of the workpiece Wk2B after the design change is acquired from the input device UI3, the offline teaching device 5 in the processing of step St14 may acquire the welding line WL2B based on surface information or edge information of each of the original workpieces Wk21B and Wk22B of the workpiece Wk2B. Specifically, the offline teaching device 5 may calculate a difference (= W2 - W1) between the width W1 of the workpiece Wk2A before the change and the width W2 of the workpiece Wk2B after the change, and a difference (= H2 - H1) between a length of a contact surface between the original workpiece Wk21A and the original workpiece Wk21B before the change and a length of a contact surface between the original workpiece Wk22A and the original workpiece Wk22B after the change, and may calculate and acquire a position and a length of the welding line WL2B based on the calculated differences.

On the other hand, if it is determined that the shape of the workpiece Wk is not changed in the processing of step St13 (St13, NO), the offline teaching device 5 proceeds to the processing of step St15.

Based on the workpiece information on the workpiece Wk recorded in the memory 52 and the workpiece information on the workpiece Wk after the change, the offline teaching device 5 determines whether there is a change in manufacturing information (for example, lot switching of the original workpiece used for production of the workpiece Wk, a change in a press process for manufacturing the original workpiece, or the like) on the original workpiece included in the workpiece information on the workpiece Wk (St15).

In the processing of step St15, if it is determined that there is a change in the manufacturing information on the original workpiece (St15, YES), the offline teaching device 5 generates a notification or a control command for requesting import of a scan result (that is, the input data related to the shape of the weld bead or the workpiece Wk) acquired by scanning the weld bead or the workpiece Wk, and transmits the notification or the control command to the monitor MN3 (St16). The generated control command may be transmitted to the host device 1 via the robot control device 2, the inspection control device 3, or the robot control device 2. The monitor MN3 outputs (displays) the notification or the control command transmitted from the offline teaching device 5, and presents the notification or the control command to the user. The scanning is performed by the sensor 4. The offline teaching device 5 acquires the welding line after the change based on the scan result transmitted from the inspection control device 3 (St17).

Here, the processing of steps St15 and St17 will be described with reference to FIG. 10. FIG. 10 shows an example in which the lot of the workpiece Wk is switched. It is needless to say that each of original workpieces Wk31A and Wk31B and each of edge portions EG3A and EG3B shown in FIG. 10 are merely examples, and the present invention is not limited thereto.

The original workpiece Wk31A shown in FIG. 10 is an original workpiece before the lot switching. The original workpiece Wk31B shown in FIG. 10 is an original workpiece after the lot switching. As shown in FIG. 10, when the lot switching occurs, the shape, size, and the like of the original workpiece change due to the machining accuracy of the original workpiece.

For example, a position of the edge portion EG3A of the original workpiece Wk31A and a position of the edge portion EG3B of the original workpiece Wk31B may change the shape of the original workpiece before and after the lot switching due to a change in machining accuracy due to the lot switching of the original workpiece. When the original workpieces Wk31B and Wk32 after the lot switching are subjected to main welding, the offline teaching device 5 needs to acquire a welding line WL3B suitable for the original workpieces Wk31B and Wk32 after the lot switching, instead of a welding line WL3A of the original workpieces Wk31A and Wk32 before the lot switching. Therefore, the offline teaching device 5 according to the embodiment calculates a displacement amount of a position of each feature point (for example, a reference point of the workpiece coordinate system ΣWk, any reference point, or the like) of the original workpieces Wk31A and Wk31B after the lot switching, a displacement amount of a surface position of each of the original workpieces Wk31A and Wk31B, or a displacement amount of a position or a rotation amount of the edge portions EG3A and EG3B of a predetermined surface, based on the scan result (that is, the input data related to the shape of the weld bead). The offline teaching device 5 acquires the welding line after the change by moving the position of the welding line before the change and calculating the position of the welding line after the change based on the calculated displacement amounts.

Accordingly, the offline teaching device 5 can analyze a feature (for example, any reference point set on the workpiece Wk, a surface shape or an edge shape of the workpiece Wk, or the like) of the workpiece Wk in which the weld bead is generated included in the input data, and can acquire a positional deviation of the workpiece Wk, an individual difference (for example, a dimensional tolerance) caused by machining accuracy of the workpiece Wk, or the like based on an analysis result. In the production of the workpiece Wk using the original workpiece of the same lot as the original workpiece constituting the scanned workpiece Wk, the offline teaching device 5 can calculate the position of the welding line after the change based on the acquired positional deviation, individual difference, and the like, and can create a welding operation teaching program and a scanning operation teaching program using the calculated welding line after the change. Therefore, the offline teaching device 5 according to the embodiment can create a welding operation teaching program for further reducing the positional deviation of the generated weld bead and a scanning operation teaching program capable of more accurately scanning the generated weld bead by considering the individual difference of the workpiece Wk.

On the other hand, if it is determined that the manufacturing information on the original workpiece is not changed in the processing of step St 15 (St15, NO), the offline teaching device 5 proceeds to the processing of step St4.

The offline teaching device 5 executes update (creation) processing of a welding operation teaching program for welding the welding line after the change based on the acquired welding line after the change and the welding operation setting information (St4). In addition, the offline teaching device 5 executes update (creation) processing of a scanning operation teaching program for scanning a weld bead formed by the main welding based on the welding line after the change, based on the acquired welding line after the change and the scanning operation setting information (St5).

As described above, the offline teaching device 5 according to the embodiment can automatically execute the update (creation) processing of each of the welding operation teaching program and the scanning operation teaching program when a change occurs in the welding line of the workpiece Wk due to, for example, the lot switching or design change of the workpiece Wk, a configuration change (for example, relocation or addition) of a production facility for producing the workpiece Wk, and a change in the workpiece information on the workpiece Wk, the welding line position information, the welding operation setting information, the scanning operation setting information, and the like. Accordingly, the offline teaching device 5 can more efficiently execute the creation of the welding operation teaching program more suitable for the main welding process of the welding line after the change and the creation of the scanning operation teaching program more suitable for the appearance inspection process of the generated weld bead. Therefore, the welding system 100 according to the embodiment can reduce the variation in the quality of the produced workpiece Wk based on each of the created welding operation teaching program and the created scanning operation teaching program.

As described above, the offline teaching device 5 according to the embodiment includes: the communication unit 50 or the input and output unit 53 (an example of an acquisition unit) that acquires data related to a first welding line of a workpiece Wk produced by welding (an example of first production data, for example, data related to the welding line shown in FIG. 5, which is data related to a welding line used in the production of the workpiece Wk for which the welding operation teaching program and the scanning operation teaching program have not been created); the memory 52 (an example of a storage unit) that stores the acquired data related to the first welding line of the workpiece Wk; and the processor 51 (an example of a teaching program creation unit) that acquires the first welding line of the workpiece Wk (for example, the welding line acquired by any processing of step St3A, step St3B, step St3C, or step St2D shown in FIG. 5) from the data related to the first welding line, and generates and outputs a first welding teaching program for performing welding by a welding robot and a first inspection teaching program for performing inspection on a weld bead of a produced workpiece. The communication unit 50 or the input and output unit 53 acquires data related to a second welding line in which at least a part of the data related to the first welding line is changed (an example of second production data, for example, data related to the welding line used for the teaching program update processing shown in FIG. 7). The processor 51 acquires a second welding line (that is, the welding line after the change) different from the first welding line from the acquired data related to the second welding line, and creates and outputs a second welding teaching program and a second inspection teaching program for a workpiece to be produced using the data related to the second welding line based on the acquired second welding line.

Here, the data related to the first welding line and the first welding line are not limited to the data used for production of the workpiece Wk before the teaching program update processing is performed. For example, when the update processing of the teaching program of the workpiece Wk having the same workpiece information is performed for the second time or later, the data related to the first welding line and the first welding line may be the data related to the welding line and the welding line used in the teaching program update processing for the first time.

Accordingly, the offline teaching device 5 according to the embodiment can automatically execute the update processing of each of the welding operation teaching program and the scanning operation teaching program of the workpiece Wk for which the teaching program has already been created. Therefore, even when the data related to the welding line is finely corrected, the user can perform the update processing on the welding operation teaching program and the scanning operation teaching program more easily, thereby improving the welding quality. In addition, for example, even when there is the lot switching or design change of the workpiece Wk, a configuration change (for example, relocation or addition) of a production facility for producing the workpiece Wk, and a change in the workpiece information on the workpiece Wk, the welding line position information, the welding operation setting information, the scanning operation setting information, and the like, the user can more efficiently manage the welding operation teaching program and the scanning operation teaching program for each workpiece Wk because the offline teaching device 5 automatically updates the welding operation teaching program and the scanning operation teaching program.

As described above, the data related to the first welding line used in the offline teaching device 5 according to the embodiment includes first position information (for example, position (coordinate) information of the stage STG1A shown in FIG. 8) of the stage STG to which the workpiece Wk is fixed. The processor 51 calculates a displacement amount (for example, a displacement amount between the stage STG1A and the stage STG1B shown in FIG. 8) of a stage based on second position information (for example, position (coordinate) information of the stage STG1B shown in FIG. 8) of the stage included in the acquired data related to the second welding line and first position information of the stage, and acquires the second welding line based on the calculated displacement amount and a position of the first welding line. Accordingly, even when the position of the stage STG to which the workpiece Wk is fixed is changed due to a configuration change of a production facility, the offline teaching device 5 according to the embodiment can calculate and acquire a position of the second welding line based on the displacement amount of the position of the stage STG, and can execute automatic update (creation) processing of each of the welding operation teaching program and the scanning operation teaching program.

As described above, the data related to the second welding line acquired by the offline teaching device 5 according to the embodiment includes three-dimensional shape data of the workpiece Wk (for example, the data on the 3D model, the input data related to the shape of the weld bead or the workpiece Wk, and the like). The processor 51 acquires the second welding line based on the acquired three-dimensional shape data. Accordingly, the offline teaching device 5 according to the embodiment can acquire the position of the second welding line based on the three-dimensional shape data of the workpiece Wk, and can execute the automatic update (creation) processing of each of the welding operation teaching program and the scanning operation teaching program.

As described above, the processor 51 of the offline teaching device 5 according to the embodiment acquires information on at least two or more surfaces (for example, surfaces SF2 and SF3 shown in FIG. 6) from the three-dimensional shape data, detects a plurality of intersection points at which the acquired two or more surfaces intersect, and acquires the second welding line based on the plurality of intersection points. Accordingly, even when the data related to the second welding line does not include the second welding line position information, the offline teaching device 5 according to the embodiment can acquire the second welding line based on each of the plurality of intersection points (specifically, a continuous line acquired by connecting the plurality of intersection points) of the two surfaces constituting the workpiece Wk.

As described above, the processor 51 of the offline teaching device 5 according to the embodiment acquires information on at least two or more surfaces from the three-dimensional shape data, detects a plurality of contact points (for example, contact points between the original workpiece Wk22A and the original workpiece Wk22B shown in FIG. 9) at which the acquired two or more surfaces intersect, and acquires the second welding line based on the plurality of contact points. Accordingly, even when the data related to the second welding line does not include the second welding line position information, the offline teaching device 5 according to the embodiment can acquire the second welding line based on each of the plurality of contact points (specifically, a continuous line acquired by connecting the plurality of contact points) of the two surfaces constituting the workpiece Wk.

As described above, the processor 51 of the offline teaching device 5 according to the embodiment acquires information on at least one surface from the three-dimensional shape data, detects a second feature point (for example, the reference point Ps1B of the workpiece coordinate system ΣWk shown in FIG. 8, the edge portion EG3B of the original workpiece Wk31B shown in FIG. 10, or the like) of the acquired one or more surfaces, calculates a displacement amount between a position of a first feature point (for example, the reference point Ps1A of the workpiece coordinate system ΣWk shown in FIG. 8, the edge portion EG3A of the original workpiece Wk31A shown in FIG. 10, or the like) of the workpiece that corresponds to the second feature point and is included in the data related to the first welding line and a position of the detected second feature point, and acquires the second welding line based on the calculated displacement amount and the position of the first welding line. Accordingly, even when the data related to the second welding line does not include the second welding line position information, the offline teaching device 5 according to the embodiment can acquire the second welding line based on the displacement amount between the positions of the feature points on the workpiece Wk.

As described above, the processor 51 of the offline teaching device 5 according to the embodiment acquires information on at least one or more surfaces from the three-dimensional shape data, detects a second edge (for example, the edge portion EG3B of the original workpiece Wk31B shown in FIG. 10) of the acquired one or more surfaces, calculates a displacement amount between a position of a first edge (for example, the edge portion EG3A of the original workpiece Wk31A shown in FIG. 10) of the workpiece that corresponds to the second edge and is included in the data related to the first welding line and a position of the detected second edge, and acquires the second welding line based on the calculated displacement amount and the position of the first welding line. Accordingly, even when the data related to the second welding line does not include the second welding line position information, the offline teaching device 5 according to the embodiment can acquire the second welding line based on the displacement amount between the positions of the edges on the workpiece Wk.

As described above, when it is determined that the three-dimensional shape data is the scan data scanned by the sensor 4, the processor 51 of the offline teaching device 5 according to the embodiment generates and outputs a notification requesting a designation operation of the second welding line, and acquires the second welding line based on the designation operation of the second welding line for the scan data by the user operation. Accordingly, the offline teaching device 5 according to the embodiment can notify the user that the data related to the second welding line does not include the second welding line position information (that is, the update processing of the welding operation teaching program and the scanning operation teaching program cannot be executed).

Although various embodiments are described above with reference to the drawings, it is needless to say that the present disclosure is not limited to such examples. It is apparent to those skilled in the art that various changes, corrections, substitutions, additions, deletions, and equivalents can be conceived within the scope of the claims, and it should be understood that such changes, corrections, substitutions, additions, deletions, and equivalents also fall within the technical scope of the present disclosure. In addition, components in the various embodiments described above may be combined freely in a range without deviating from the spirit of the disclosure.

The present application is based on Japanese Patent Application No. 2021-104353 filed on June 23, 2021, and the contents thereof are incorporated herein by reference.

### INDUSTRIAL APPLICABILITY

The present disclosure is useful as an offline teaching device and an offline teaching method for more efficiently updating a welding operation teaching program or a scanning operation teaching program executed by a welding robot.

### REFERENCE SIGNS LIST

1: host device
2: robot control device
3: inspection control device
4: sensor
5: offline teaching device
10, 20, 30, 50: communication unit
11, 21, 31, 51: processor
12, 22, 32, 52: memory
53: input and output unit
54: 3D calculation unit
55: program creation unit
551: welding operation creation unit
552: scanning operation creation unit
100: welding system
200: manipulator
300: wire feeding device
301: welding wire
400: welding torch
500: power supply device
EG3A, EG3B: edge portion
MC1, MC1A, MC1B: welding robot
MD1, MD2, MD3: 3D model
MN1, MN2, MN3: monitor
PS0, Ps1A, Ps1B: reference point
STG: stage
UI3: input device
WL1A, WL1B, WL3A, WL3B, WLM1, WLM2: welding line
WLM3, WLM4: continuous line
Wk, Wk1A, Wk1B, Wk2A, Wk2B: workpiece

## Claims

1. An offline teaching device comprising:
an acquisition unit that acquires first production data of a workpiece produced by welding;
a storage unit that stores the acquired first production data; and
a teaching program creation unit that acquires a first welding line of the workpiece from the first production data, and that creates and outputs a first welding teaching program for executing the welding by a welding robot and a first inspection teaching program for executing inspection of a weld bead of the produced workpiece, wherein
the acquisition unit acquires second production data in which at least a part of the first production data is changed, and
the teaching program creation unit acquires a second welding line different from the first welding line from the second production data and creates and outputs a second welding teaching program and a second inspection teaching program of a workpiece produced using the second production data based on the acquired second welding line.

2. The offline teaching device according to claim 1, wherein
the first production data includes first position information of a stage to which the workpiece is fixed, and
the teaching program creation unit calculates a displacement amount of the stage based on second position information of the stage included in the acquired second production data and the first position information of the stage, and acquires the second welding line based on the calculated displacement amount and a position of the first welding line.

3. The offline teaching device according to claim 1, wherein
the second production data includes three-dimensional shape data of the workpiece, and
the teaching program creation unit acquires the second welding line based on the acquired three-dimensional shape data.

4. The offline teaching device according to claim 3, wherein
the teaching program creation unit acquires information on at least two or more surfaces from the three-dimensional shape data, detects a plurality of intersection points at which the acquired two or more surfaces intersect, and acquires the second welding line based on the plurality of intersection points.

5. The offline teaching device according to claim 3, wherein
the teaching program creation unit acquires information on at least two or more surfaces from the three-dimensional shape data, detects a plurality of contact points where the acquired two or more surfaces are in contact, and acquires the second welding line based on the plurality of contact points.

6. The offline teaching device according to claim 3, wherein
the teaching program creation unit acquires information on at least one or more surfaces from the three-dimensional shape data, detects a second feature point of the acquired one or more surfaces, calculates a displacement amount between a position of a first feature point of the workpiece that corresponds to the second feature point and is included in the first production data and a position of the detected second feature point, and acquires the second welding line based on the calculated displacement amount and a position of the first welding line.

7. The offline teaching device according to claim 3, wherein
the teaching program creation unit acquires information on at least one or more surfaces from the three-dimensional shape data, detects a second edge of the acquired one or more surfaces, calculates a displacement amount between a position of a first edge of the workpiece that corresponds to the second edge and is included in the first production data and a position of the detected second edge, and acquires the second welding line based on the calculated displacement amount and a position of the first welding line.

8. The offline teaching device according to claim 3, wherein
when it is determined that the three-dimensional shape data is scan data scanned by a sensor, the teaching program creation unit creates and outputs a notification requesting a designation operation of the second welding line, and acquires the second welding line based on the designation operation of the second welding line for the scan data by a user operation.

9. An offline teaching method performed by an offline teaching device including one or more computers communicably connected to a robot control device capable of controlling a welding robot performing welding, the offline teaching method comprising:
acquiring and storing first production data of a workpiece produced by the welding;
acquiring a first welding line of the workpiece from the first production data;
creating and outputting a first welding teaching program for executing the welding by the welding robot and a first inspection teaching program for executing inspection of a weld bead of the produced workpiece;
acquiring second production data in which at least a part of the first production data is changed; and
creating and outputting a second welding teaching program and a second inspection teaching program corresponding to a workpiece produced using the second production data based on the first welding line included in the acquired first production data and the second welding line included in the acquired second production data.
